# EUROPÄISCHE PATENTSCHRIFT

(11) **EP 3 834 265 B1**
(45) Veröffentlichungstag und Bekanntmachung des Hinweises auf die Patenterteilung: **04.11.2026**
(21) Anmeldenummer: 19749702.7
(22) Anmeldetag: 01.08.2019
(51) Int. Cl.: H02J 1/102, H02J 1/10, H02J 7/82, H02J 7/00, H02J 7/90

(54) **VERFAHREN ZUR REGELUNG DES NETZES EINES UNTERWASSERFAHRZEUGS UND UNTERWASSERFAHRZEUG, WELCHES ZU EINER DERARTIGEN REGELUNG AUSGESTALTET IST**
METHOD FOR REGULATING THE NETWORK OF AN UNDERWATER VEHICLE AND UNDERWATER VEHICLE, WHICH IS DESIGNED FOR SUCH REGULATING
PROCÉDÉ DE RÉGULATION DU RÉSEAU D'UN VÉHICULE SOUS-MARIN ET VÉHICULE SOUS-MARIN ÉQUIPÉ D'UNE RÉGULATION DE CE GENRE

(30) Priorität: 07.08.2018 DE 102018213180
(43) Veröffentlichungstag der Anmeldung: 16.06.2021
(73) Patentinhaber: TKMS GmbH, 24143 Kiel (DE); thyssenkrupp AG, 45143 Essen (DE)
(72) Erfinder: MECHSNER, Alfred, 24148 Kiel (DE); FRIEDERICH, Tim, 24105 Kiel (DE)
(86) Internationale Anmeldenummer: PCT/EP2019/070788
(87) Internationale Veröffentlichungsnummer: WO 2020/030523

(56) Entgegenhaltungen:
- DE-A1- 102013 209 396
- US-A1- 2018 191 164

## Beschreibung

Die Erfindung betrifft ein Verfahren zur automatischen Regelung eines elektrischen Netzes eines Unterwasserfahrzeugs sowie ein Unterwasserfahrzeug mit einem elektrischen Netz, wobei das Unterwasserfahrzeug zur Durchführung eines solchen Verfahrens ausgestaltet ist.

Ein autonom operierendes Unterwasserfahrzeug soll in der Regel längere Zeit unter Wasser fahren, ohne mit einer externen Spannungsquelle verbunden werden zu müssen. Mindestens ein elektrischer Verbraucher des Unterwasserfahrzeugs, insbesondere ein elektrischer Fahrmotor, wird von mehreren elektrischen Spannungsquellen versorgt. Spannungswandler, in der Regel Gleichspannungswandler, wandeln den bereitgestellten Strom in diejenige Spannung um, in welcher der Verbraucher Strom benötigt.

DE 10 2013 209 396 A1 offenbart einen Gleichspannungswandler zur Anpassung einer elektrischen Gleichspannung, umfassend mehrere unabhängig voneinander zu- und abschaltbare Wandlermodule und eine Steuerungseinheit, die zu einer leistungsabhängigen Zu- und Abschaltung von Wandlermodulen ausgebildet ist.

US 2018/0191164 A1 zeigt ein Stromversorgungssystem umfassend elektrische Energiequellen und Steuergeräte zum Steuern der elektrischen Energiequellen gemäß einem Zielwert der vom elektrischen Energiesystem erzeugten elektrischen Energie. Aufgabe der Erfindung ist es, ein Verfahren mit den Merkmalen des Oberbegriffs des Anspruchs 1 und ein Unterwasserfahrzeug mit den Merkmalen des Oberbegriffs des Anspruchs 15 bereitzustellen, welche es ermöglichen, dass die Leistungsverluste, welche die Spannungswandler zwangsläufig verursachen, geringer als bei bekannten Verfahren ist und bei denen dennoch rasch auf Leistungsschwankungen reagiert werden kann.

Gelöst wird diese Aufgabe durch ein Verfahren mit den in Anspruch 1 angegebenen Merkmalen und ein Unterwasserfahrzeug mit den in Anspruch 15 angegebenen Merkmalen. Vorteilhafte Weiterbildungen ergeben sich aus den Unteransprüchen, der nachfolgenden Beschreibung sowie den Zeichnungen.

Das lösungsgemäße Unterwasserfahrzeug umfasst ein elektrisches Netz. Dieses elektrische Netz umfasst
- einen elektrischen Verbraucher,
- N_ges parallel angeordnete Versorgungsstränge, wobei N_ges größer oder gleich 2 ist, und
- einen signalverarbeitenden Regler.

Jeder Versorgungsstrang umfasst jeweils
- eine Spannungsquelle und
- einen Spannungswandler.

Die jeweilige Spannungsquelle jedes Versorgungsstrangs ist über den Spannungswandler dieses Versorgungsstrangs mit dem Verbraucher elektrisch verbunden. Die Spannungsquelle vermag dazu beizutragen, den elektrischen Verbraucher mit elektrischem Strom in der benötigten Spannung zu versorgen. Der elektrische Verbraucher vermag elektrische Leistung aufzunehmen.

Der jeweilige Spannungswandler jedes Versorgungsstrangs lässt sich wahlweise in mindestens einem Lastzustand oder in mindestens einem Ruhezustand betreiben. Mindestens einmal wird automatisch ein Entlade-Anpassungs-Schritt durchgeführt. Dieser Entlade-Anpassungs-Schritt umfasst die folgenden Schritte:
- Der Regler wählt unter den N_ges Versorgungssträngen des Netzes N Versorgungsstränge aus. Diese Auswahl führt der Regler in Abhängigkeit von der aktuellen Leistungsaufnahme P des Verbrauchers durch. N ist kleiner oder gleich N_ges.
- Der Regler steuert die Spannungswandler der N_ges Versorgungsstränge des Netzes mit folgendem Ziel an: Nach der Ansteuerung sind die Spannungswandler der N ausgewählten Versorgungsstränge in jeweils einem Lastzustand und die Spannungswandler der übrigen N_ges - N Versorgungsstränge in jeweils einem Ruhezustand.

Der elektrische Verbraucher wird von den N ausgewählten Versorgungssträngen elektrisch versorgt. Mindestens ein nicht ausgewählter Versorgungsstrang unter den N_ges - N nicht ausgewählten Versorgungssträngen des Netzes bleibt mit dem elektrischen Verbraucher verbunden. Möglich ist, dass alle nicht ausgewählten N_ges - N Versorgungsstränge des Netzes mit dem Verbraucher elektrisch verbunden bleiben.

Der Spannungswandler ist in dem Ruhezustand eingeschaltet und lässt sich aus dem Ruhezustand durch einen Stelleingriff in den oder einen Lastzustand überführen. Der Versorgungsstrang wird dadurch aktiv geschaltet, dass der Spannungswandler von dem Ruhezustand in den Lastzustand überführt wird, wobei für diesen Schritt ein Leistungsschalter nicht benötigt wird.

Der Regler vermag das Netz vollautomatisch zu regeln. Ein manueller Stelleingriff eines Benutzers ist nicht erforderlich. Jedoch kann vorgesehen sein, dass ein Benutzer einen manuellen Stelleingriff vornimmt und dadurch eine vom Regler automatisch getroffene Auswahl oder Ansteuerung überschreibt und / oder ergänzt, beispielsweise einen Spannungswandler von einem Ruhezustand in einen Lastzustand überführt oder einen Versorgungsstrang elektrisch vom Verbraucher trennt.

Die Erfindung sieht vor, dass der Regler automatisch N Versorgungsstränge auswählt. Diese Auswahl hängt von der aktuellen Leistungsaufnahme P des Verbrauchers ab. Damit wird ermöglicht, eine Überlastung eines Versorgungsstrangs zu verhindern, weil ausreichend viele Versorgungsstränge ausgewählt werden und gemeinsam den Verbraucher versorgen.

In der Regel nimmt der Verbraucher meistens nur eine elektrische Leistung auf, die ein Bruchteil der maximal verfügbaren elektrischen Leistung ausmacht, oft weniger als 10 %. Die volle elektrische Leistung von den N_ges Versorgungssträngen muss aber dergestalt zur Verfügung stehen, dass sie schnell automatisch abgerufen werden kann.

Ein Spannungswandler arbeitet in der Regel dann mit einer geringen Verlustleistung, wenn er in einem Ruhezustand ist oder mit einer hohen Auslastung, insbesondere unter Volllast, arbeitet, beispielsweise gemäß einem vorgegebenen U-I-Zusammenhang arbeitet. Unter Volllast liefert der Spannungswandler bei jeder im Betrieb tatsächlich auftretenden Spannung eine Stromstärke annähernd gleich der im Dauerbetrieb maximal möglichen Stromstärke und / oder im Dauerbetrieb maximal möglichen Leistungsabgabe. Unter "hoher Auslastung" wird ein Bereich oberhalb von 75 % der Volllast, Vorzug 80 % der Volllast, besonders bevorzugt 90 %, ganz besonders bevorzugt 95 % der Volllast verstanden. Die gesamte Verlustleistung, welche die Spannungswandler des Netzes zusammen verursachen, ist daher gering, wenn so viele Spannungswandler wie nötig unter Volllast arbeiten und die übrigen in einem Ruhezustand sind. Dies führt zu einer geringeren gesamten Verlustleistung, als wenn alle Spannungswandler in einem mittleren Zustand zwischen der Volllast und dem Ruhezustand arbeiten würden.

Die Erfindung ermöglicht es, für jeden Spannungswandler jeweils mindestens einen Lastzustand vorzugeben. Dieser Lastzustand kann ein optimaler Betriebspunkt sein, beispielsweise einer, in dem die prozentuale Verlustleistung minimal ist. Der Spannungswandler arbeitet unter Volllast, wenn er in diesen Lastzustand versetzt wird. Möglich ist, dass der Lastzustand durch einen vorgegeben U-I-Zusammenhang festgelegt wird, also durch einen Zusammenhang, der die abzugebende Stromstärke abhängig von der anliegenden Spannung festlegt.

Erreicht werden soll also, dass so viele Spannungswandler der N_ges Versorgungsstränge wie nötig in Volllast arbeiten, also beispielsweise in jeweils einem optimalen Betriebspunkt, und die übrigen im Ruhezustand sind. Eine denkbare Möglichkeit, um dies zu erreichen, ist die, mit jeweils einem Leistungsschalter einen Versorgungsstrang zuzuschalten oder abzuschalten und auf diese Weise zu erreichen, dass die Spannungswandler der zugeschalteten und daher aktiven Versorgungsstränge unter Last, beispielsweise unter Volllast, arbeiten und die Spannungswandler der übrigen Versorgungsstränge im Ruhezustand sind.

Die Erfindung sieht stattdessen vor, alle oder wenigstens mehr als die N ausgewählten N_ges Versorgungsstränge in elektrischer Verbindung mit dem Verbraucher zu belassen, die Spannungswandler der N ausgewählten Versorgungsstränge in einen Lastzustand zu versetzen oder zu belassen und die Spannungswandler der nicht ausgewählten N_ges - N Versorgungsstränge in den oder jeweils einen Ruhezustand zu versetzen oder zu belassen. Dadurch wird im regulären Betrieb kein Leistungsschalter für einen Versorgungsstrang benötigt. Natürlich kann trotzdem jeweils ein Leistungsschalter für jeden Versorgungsstrang vorgesehen sein, insbesondere um einen gestörten Versorgungsstrang abzuschalten oder wenn der Verbraucher vom Netz genommen werden soll.

Ein Spannungswandler im Ruhezustand ist gemäß der Erfindung nicht notwendigerweise abgeschaltet oder gar elektrisch vom Netz getrennt. Vielmehr bleibt der Spannungswandler eingeschaltet und lässt sich aus dem Ruhezustand durch einen Stelleingriff in den oder einen Lastzustand überführen. Ein Versorgungsstrang wird dadurch aktiv geschaltet, dass ein Spannungswandler von einem Ruhezustand in einen Lastzustand überführt wird. Für diesen Schritt wird ein Leistungsschalter nicht benötigt.

Ein Vorteil, im regulären Betrieb auf Leistungsschalter verzichten zu können, ist der folgende: Ein Leistungsschalter lässt sich nur in zwei Zuständen betreiben, er ist nämlich entweder geschlossen oder geöffnet. Daher kann mit Hilfe eines Leistungsschalters ein Versorgungsstrang nur schlagartig zugeschaltet oder abgeschaltet werden, so dass der Zustand des Netzes sich zwangsläufig schlagartig ändert. Ein Spannungswandler hingegen lässt sich auch allmählich, beispielsweise nacheinander über mehrere Zwischenstufen, verändern und dadurch allmählich von einem Ruhezustand in einen Lastzustand oder umgekehrt überführen. Dadurch wird der Zustand des Netzes allmählich anstelle schlagartig verändert. Bei Bedarf ist es aber weiterhin möglich, einen Spannungswandler schlagartig vom Ruhezustand in den Lastzustand oder umgekehrt zu überführen, beispielsweise wenn der Verbraucher schlagartig mehr elektrische Leistung aufnimmt. Auch für diese schlagartige Veränderung wird kein Leistungsschalter benötigt. Die nicht ausgewählten N - N_ges Versorgungsstränge sind also in einem sogenannten "hot stand-by". Ist ein Spannungswandler im Ruhezustand, also im hot stand-by, heißt dies, dass der Spannungswandler derart angesteuert wird, dass derselbe dem zugeordneten Versorgungsstrang keine Energie bereitstellt, also beispielsweise eine Spannung von 0V bzw. einen Strom von 0A in den Versorgungsstrang einspeist. Zur Ansteuerung des Spannungswandlers wird beispielsweise ein (elektronisches) Schaltelement, z.B. ein IGBT (insulated gate bipolar transistor, dt.: Bipolartransistor mit isolierter Gate-Elektrode), verwendet.

Allerdings ist es auch möglich, einzelne Spannungswandler von den Versorgungssträngen zu trennen, d.h. insbesondere abzuschalten. Dies kann z.B. zur Angleichung der Belastungen der Spannungswandler erfolgen. Beispielsweise wird ein Spannungswandler über einen längeren Zeitraum oberhalb des optimalen Betriebspunkts betrieben und ist heiß gelaufen. In diesem Fall kann der Spannungswandler zunächst abgeschaltet werden um schnell abzukühlen. Erst nach dem Abkühlen kann derselbe wieder in den Ruhezustand bzw. Bereitschaftsmodus versetzt werden. Somit wird die maximale Lebensdauer des Spannungswandlers nicht dadurch verkürzt, dass derselbe zu lange einer hohen Temperatur ausgesetzt ist. Zum Abschalten wird der Spannungswandler beispielsweise spannungsfrei geschaltet. Die vorherigen Ausführungen zu den Spannungswandlern sind analog für die Spannungsquellen anwendbar.

Ein weiterer Vorteil der Erfindung im Vergleich zur Verwendung von Leistungsschaltern ist dieser: In der Regel lässt ein Spannungswandler sich schneller von einem Ruhezustand in einen Lastzustand versetzen, als ein Lastschalter sich umschalten lässt und dadurch einen weiteren Versorgungsstrang zuschalten kann. In manchen Anwendungen verursacht außerdem das Verändern eines Spannungswandlers weniger Geräusche als das Schalten eines Leistungsschalters.

Lösungsgemäß bleibt mindestens ein nicht ausgewählter Versorgungsstrang, bevorzugt alle N_ges Versorgungsstränge des Netzes mit dem Verbraucher verbunden. Falls die Leistungsaufnahme des Verbrauchers schlagartig ansteigt, so ermöglicht die Erfindung es daher, dass der Regler rasch reagiert. Der Regler wird nämlich in die Lage versetzt, den Spannungswandler mindestens eines nicht ausgewählten und elektrisch verbundenen Versorgungsstrangs so anzusteuern, dass dieser Spannungswandler ebenfalls in den oder einen Lastzustand versetzt wird. Nicht erforderlich ist es, einen Leistungsschalter umzuschalten, was mehr Zeit erfordert.

In Kauf genommen wird bei einem starken Anstieg der Leistungsaufnahme, dass dann zeitweise mehr als die N ausgewählten Versorgungsstränge aktiv sind. Die Anforderung, den Verbraucher auch bei einem raschen Leistungsanstieg zu versorgen, ist aber wichtiger als eine jederzeit minimale Verlustleistung.

In einer bevorzugten Ausgestaltung wählt der Regler die N Versorgungsstränge nicht nur in Abhängigkeit von der aktuellen Leistungsaufnahme P des Verbrauchers aus, sondern zusätzlich in Abhängigkeit von den aktuellen Zuständen der N_ges Versorgungsstränge des Netzes. Dadurch wird ermöglicht, dass der Regler automatisch auf stark unterschiedliche Zustände der Versorgungsstränge reagiert, insbesondere auf differierende Ladezustände von Spannungsquellen und unterschiedlich starken Erwärmungen. Falls ein Versorgungsstrang aktuell vom Netz getrennt ist, wählt der Regler ihn nicht aus. Weil auch in dieser Ausgestaltung der Auswahl von der aktuellen Leistungsaufnahme P des Verbrauchers abhängt, wird eine Überlastung eines Versorgungsstrangs verhindert.

In einer Ausgestaltung werden ein automatisch auswertbarer Entlade-Anzahl-Zusammenhang und ein automatisch auswertbares Entlade-Auswahl-Kriterium vorgegeben. Der vorgegebene Entlade-Anzahl-Zusammenhang legt für eine Vielzahl von möglichen Werten für die Leistungsaufnahme P des Verbrauchers jeweils eine Soll-Anzahl N_opt = N_opt(P) von gleichzeitig aktiven Versorgungssträngen des Netzes fest und ist bevorzugt in einer von dem Regler automatisch auswertbaren Form an Bord des Unterwasserfahrzeugs abgespeichert. Das vorgegebene Entlade-Auswahl-Kriterium hängt von den Zuständen der N_ges Versorgungsstränge des Netzes ab.

Gemäß dieser bevorzugten Ausgestaltung hängt die Auswahl der N Versorgungsstränge sowohl von der aktuellen Leistungsaufnahme P des Verbrauchers als auch von den Zuständen der N_ges Versorgungsstränge ab. In einer bevorzugten Ausführungsform dieser Ausgestaltung wird die Auswahl der N Versorgungsstränge auf zwei Schritte verteilt. Beim Schritt, N Versorgungsstränge auszuwählen, führt der Regler die folgenden Schritte durch:
- Der Regler ermittelt eine Soll-Anzahl N_opt(P). Der Entlade-Anzahl-Zusammenhang ordnet diese ermittelte Anzahl N_opt(P) von Spannungswandlern der aktuellen Leistungsaufnahme P des Verbrauchers zu.
- Der Regler wählt die N Versorgungsstränge so aus, dass N größer oder gleich N_opt(P) ist. Für die Auswahl der N Versorgungsstränge wendet der Regler das vorgegebene Entlade-Auswahl-Kriterium an, welches von den aktuellen Zuständen abhängt.

Der erste Schritt hängt nur von der aktuellen Leistungsaufnahme P ab, aber nicht von den Betriebszuständen der N_ges Versorgungsstränge, und führt dazu, dass eine optimale Soll-Anzahl N_opt(P) ermittelt wird. Der zweite Schritt hängt nur von der im ersten Schritt ermittelten Soll-Anzahl N_opt(P) sowie den Zuständen der N_ges Versorgungsstränge ab. Abhängig von diesen Zuständen werden die N Versorgungsstränge so ausgewählt, dass N größer oder gleich N_opt (P) ist. Dadurch wird sichergestellt, dass mindestens die für die aktuelle Leistungsaufnahme P optimale Anzahl N_opt(P) von Versorgungssträngen ausgewählt wird. Dadurch wird darüber hinaus ermöglicht, dass jeder ausgewählte Spannungswandler in einem optimalen Betriebspunkt arbeitet. Weiterhin wird eine Überlastung eines Versorgungsstrangs verhindert. Möglich ist, dass der Regler zusätzlich zu den N_opt(P) Versorgungsstränge mindestens einen weiteren Versorgungsstrang auswählt, bevorzugt einen oder zwei zusätzliche Versorgungsstränge, um bei einem geringen Leistungsanstieg die Versorgung unverändert lassen zu können und nicht erneut eine Auswahl durchführen zu müssen. Die Anzahl zusätzlich ausgewählter Versorgungsstränge kann fest vorgegeben sein.

Der Entlade-Anzahl-Zusammenhang lässt sich abhängig von Charakteristiken der Spannungswandler und / oder der Spannungsquellen vorgeben, insbesondere abhängig von Innenwiderständen der Spannungsquellen und / oder von einem optimalen U-I-Zusammenhang eines Spannungswandlers.

Das Entlade-Auswahl-Kriterium lässt sich an vorgegebene Anforderungen anpassen, beispielsweise daran, dass die Spannungsquellen möglichst gleich hohe Spannungen bereitstellen sollten oder auf gleichem Ladezustand gehalten werden und / oder die Spannungsquellen und Spannungswandler möglichst gleich stark erwärmt sein sollten oder etwa die gleiche Anzahl von bislang durchgeführten Lade- und Entlade-Zyklen aufweisen soll. Durch eine geeignete Festlegung des Entlade-Auswahl-Kriteriums lässt sich daher die Lebensdauer der Spannungsquellen verlängern.

Die Ausgestaltung, dass zunächst eine optimale Soll Anzahl N_opt(P) ermittelt wird und anschließend N Versorgungsstränge so gewählt werden, dass N größer oder gleich N_opt(P) ist, ist insbesondere dann eine bevorzugte Ausgestaltung, wenn alle Versorgungsstränge des Netzes die gleiche elektrische Nennleistung erbringen und sich nur durch unterschiedliche Positionierungen und unterschiedliche aktuelle Betriebszustände unterscheiden können. Beispielsweise umfasst jede Spannungsquelle die gleiche Anzahl von Batteriezellen, und alle Batteriezellen sind - bis auf unterschiedliche Betriebszustände - gleichartig.

In einer Abwandlung wird die Möglichkeit berücksichtigt, dass mindestens zwei Versorgungsstränge unterschiedliche Nennleistungen aufweisen. Bei dieser Abwandlung wird anstelle einer Soll-Anzahl N_opt (P) eine Soll-Gesamt-Nennleistung P_opt(P) bestimmt, welche abhängig von der aktuellen Leistungsaufnahme P die insgesamt von den Versorgungssträngen bereitzustellende Soll-Nennleistung festgelegt. Anschließend wählt der Regler die Versorgungsstränge so aus, dass mindestens die Soll-Gesamt-Nennleistung P_opt(P) tatsächlich bereitgestellt wird. Auch in dieser Ausgestaltung ist es möglich, dass die tatsächlich bereitgestellte Leistung größer als die optimale Soll-Gesamt-Nennleistung P_opt(P) ist.

Vorzugsweise wählt der Regler die N Versorgungsstränge abhängig von mindestens einem der folgenden Kriterien aus:
- den aktuellen Lade-Zuständen der Spannungsquellen,
- den aktuellen Temperaturen der Spannungsquellen,
- den aktuellen Temperaturen der Spannungswandler,
- den Anzahlen der jeweils bislang durchgeführten Lade-Vorgänge und / oder Entlade-Vorgänge für die Spannungsquellen und / oder
- den räumlichen Positionierungen der Versorgungsstränge

Wenn die Auswahl der N Versorgungsstränge von den Lade-Zuständen abhängt, wird ermöglicht, diejenigen Versorgungsstränge auszuwählen, deren Spannungsquellen aktuell den besten Lade-Zustand aufweisen. Beispielsweise wählt der Regler im Entlade-Betrieb diejenigen N Versorgungsstränge aus, deren Spannungsquellen zum Zeitpunkt der Auswahl die höchsten Ladezustände aufweisen, beispielsweise die höchsten Spannungswerte bereitstellen. Insbesondere wird ermöglicht, dass die aktuell am höchsten aufgeladen Spannungsquellen vorrangig entladen werden und daher alle Spannungsquellen auf möglichst ähnliche Ladezustände gebracht werden.

Wenn die Auswahl der N Versorgungsstränge von den aktuellen Temperaturen abhängt, so wird ermöglicht, aktuell stark erhitzte Spannungsquellen und / oder Spannungswandler zu deaktivieren und diese dadurch abkühlen zu lassen.

In der Regel wird eine Spannungsquelle durch einen Lade-Vorgang belastet und / oder durch einen Entlade-Vorgang belastet. Wenn die Auswahl der N Versorgungsstränge von der Anzahl der bislang durchgeführten Lade-Vorgänge oder Entlade-Vorgänge abhängt, so werden Spannungsquellen, die bislang häufig beladen oder entladen wurden, zukünftig weniger stark belastet. Durch eine geeignete Vorgabe des Entlade-Auswahl-Kriteriums wird erreicht, dass die Lebensdauern der Spannungsquellen weniger stark voneinander abweichen. In der Regel ist daher seltener eine Instandsetzung erforderlich, bei der mindestens eine Spannungsquelle repariert oder ausgetauscht wird. Beispielsweise ist nur eine Instandsetzung erforderlich, bei welcher zwei Spannungsquellen wartet oder ausgetauscht werden, anstelle zwei Instandsetzungen für jeweils eine Spannungsquelle.

Wenn die Auswahl der N Versorgungsstränge von den Positionierungen der N_ges Versorgungsstränge abhängt, so wird ermöglicht, dass die Magnetfelder, welche die Versorgungsstränge zwangsläufig erzeugen, sich wenigstens teilweise und wenigstens lokal gegenseitig kompensieren. Dadurch wird ermöglicht, die magnetische Abstrahlung des Netzes und somit die elektromagnetische Signatur des Unterwasserfahrzeugs zu reduzieren.

In einer Ausgestaltung werden die Entlade-Anpassungs-Schritte zeitabhängig durchgeführt, beispielsweise mit einer festen Abtastrate. In einer bevorzugten Ausgestaltung werden sie hingegen ereignisgesteuert durchgeführt, beispielsweise abhängig von einem vorgegebenen Entlade-Durchführungs-Kriterium.

In einer Ausgestaltung wird wie folgt automatisch auf das Ereignis reagiert, dass nach einem Entlade-Anpassungs-Schritt die Leistungsaufnahme P des Verbrauchers angestiegen ist: Der Regler oder eine spezielle Anpassungs-Einheit
- wählt mindestens einen der aktuell nicht ausgewählten Versorgungsstränge aus und
- versetzt den Spannungswandler des oder jedes zusätzlich ausgewählten Versorgungsstrangs in den oder einen Lastzustand.
- Der Regler führt anschließend erneut einen Entlade-Anpassungs-Schritt durch.

Diese Ausgestaltung stellt sicher, dass auch nach einem raschen Anstieg der Leistungsaufnahme ausreichend viele Versorgungsstränge aktiv sind und daher die geforderte Leistung bereitgestellt werden kann, ohne eine Spannungsquelle oder einen Spannungswandler zu überlasten. Weiterhin wird ermöglicht, auch bei einem plötzlichen Leistungsanstieg die Spannungswandler und die Spannungsquellen optimal zu betreiben, nämlich indem der Regler erneut einen Entlade-Anpassungs-Schritt durchführt.

Die gerade beschriebene Ausgestaltung ermöglicht es zum einen, dass rasch auf eine signifikante Änderung der Leistungsaufnahme reagiert wird. Insbesondere wird sichergestellt, dass bei einem raschen Anstieg der Leistungsaufnahme in ausreichend kurzer Zeit mindestens ein zusätzlicher Versorgungsstrang aktiv geschaltet wird, indem dessen Spannungswandler in einen Lastzustand überführt wird. Verhindert wird, dass ein Versorgungsstrang überlastet wird. Die Ausgestaltung mit der speziellen Anpassungs-Einheit ermöglicht oft eine besonders rasche Reaktion auf einen plötzlichen Leistungsanstieg. Möglich ist, dass die spezielle Anpassungs-Einheit nacheinander gemäß einer vorgegebenen Reihenfolge jeden Versorgungsstrang daraufhin prüft, ob dieser bereits ausgewählt ist, und mindestens den ersten noch nicht ausgewählten Versorgungsstrang nunmehr auswählt. Bevorzugt wird dieser Auswahl wiederholt, bis die ausgewählten Versorgungsstränge den plötzlichen Leistungsanstieg erfüllen können. Diese spezielle Anpassungs-Einheit kann besonders dann rasch reagieren, wenn sie nur die Aufgabe hat, auf einen plötzlichen Leistungsanstieg zu reagieren.

Andererseits sieht die Ausgestaltung vor, dass nach einer signifikanten Änderung der Leistungsaufnahme erneut ein Entlade-Anpassungs-Schritt durchgeführt wird. Dadurch ermöglicht es diese Ausgestaltung, dass sofort oder noch kurzer Zeit die Anzahl N der ausgewählten Versorgungsstränge an die aktuelle Leistungsaufnahme P und die Zustände der Versorgungsstränge angepasst wird und daher die Spannungswandler nur wenig Verlustleistung erzeugen.

In einer Ausgestaltung wird automatisch überwacht, ob die Leistungsaufnahme P des Verbrauchers sich seit dem zeitlich letzten Entlade-Anpassungs-Schritt erheblich verändert hat. Diese Überwachung kann vom Regler oder von einer speziellen Anpassungs-Einheit ausgeführt werden. Eine erhebliche Veränderung bedeutet, dass die Veränderung ein vorgegebenes Entlade-Durchführungs-Kriterium erfüllt. Die Veränderung kann bedeuten, dass die Leistungsanforderung vergrößert oder auch verkleinert ist. Das Entlade-Durchführungs-Kriterium legt z.B. eine untere Schranke für die prozentuale oder absolute Veränderung der Leistungsaufnahme fest. Das Entlade-Durchführungs-Kriterium ist in der Regel insbesondere nach einer plötzlich gesteigerten oder plötzlich reduzierten Leistungsanforderung des Verbrauchers erfüllt. Falls die Veränderung der Leistungsaufnahme das vorgegebene Entlade-Durchführungs-Kriterium erfüllt, so führt der Regler erneut einen Entlade-Anpassungs-Schritt durch, um eine geeignete Anzahl von aktiven Versorgungssträngen zu finden. Dadurch wird die Verlustleistung reduziert.

Diese Ausgestaltung lässt sich kombinieren mit der oben beschriebenen bevorzugten Reaktion auf einen plötzlichen Leistungsanstieg: Zunächst wird automatisch mindestens ein nicht ausgewählter Versorgungsstrang ausgewählt, und jeweils ein Spannungswandler jedes nunmehr ausgewählten Versorgungsstrangs wird in einen Lastzustand versetzt. Diese Schritte können von dem Regler oder von der speziellen Anpassungs-Einheit ausgeführt werden. Anschließend führt der Regler erneut einen Entlade-Anpassungs-Schritt durch, um nach dem Zuschalten mindestens eines Versorgungsstrangs eine geeignete Anzahl von aktiven Versorgungssträngen zu finden.

Die ereignisgesteuerte Auswahl der N Versorgungsstränge kann auch von den Betriebszuständen der Versorgungsstränge abhängen. In einer Ausgestaltung überwacht der Regler automatisch, ob ein Betriebszustand mindestens eines Versorgungsstrangs sich seit dem zeitlich letzten Entlade-Anpassungs-Schritt verändert hat. Wiederum bedeutet eine erhebliche Veränderung, dass die Veränderung des Betriebszustands ein vorgegebenes Auswahl-Durchführungs-Kriterium erfüllt.

Mindestens dann, wenn die Veränderung eines Betriebszustandes das vorgegebene Auswahl-Durchführungs-Kriterium erfüllt, wählt der Regler erneut N Versorgungsstränge aus und versetzt oder belässt die Spannungswandler der N ausgewählten Versorgungsstränge in einem Lastzustand. Möglich, aber nicht erforderlich ist, dass der Regler erneut eine optimale Anzahl von auszuwählenden Versorgungssträngen ermittelt. Denn der Grund für die erneute Auswahl ist ja, dass ein Betriebszustand eines Versorgungsstrangs sich verändert hat, und nicht notwendigerweise eine veränderte Leistungsaufnahme P des Verbrauchers.

Diese Ausgestaltung ermöglicht es zum einen, dass der Regler rasch auf eine signifikante Veränderung des Betriebszustands einer Spannungsquelle oder eines Spannungswandlers reagiert. Insbesondere wird sichergestellt, dass bei einer raschen Entladung einer Spannungsquelle oder einer großen Erhitzung einer Spannungsquelle oder eines Spannungswandlers in ausreichend kurzer Zeit dieser Versorgungsstrang wenigstens zeitweise deaktiviert wird, indem sein Spannungswandler in den Ruhezustand versetzt wird, und mindestens ein anderer Versorgungsstrang aktiv geschaltet wird, indem dessen Spannungswandler in einen Lastzustand überführt wird. Um dieses Ziel zu erreichen, ist es nicht erforderlich, einen Leistungsschalter umzulegen. Weiterhin bleiben bevorzugt alle Versorgungsstränge mit dem Verbraucher elektrisch verbunden.

Vorzugsweise bleibt die Auswahl der N Versorgungsstränge unverändert, solange weder die Veränderung der Leistungsaufnahme noch die Veränderung der Betriebszustände ein Durchführungs-Kriterium erfüllt. Diese Ausgestaltung stellt sicher, dass der Zustand des Netzes nur dann verändert wird, wenn die Leistungsaufnahme P des Verbrauchers oder der Betriebszustand eines Versorgungsstrangs sich signifikant verändert hat. Kleine und daher weder für die Verlustleistung für die Betriebszustände erhebliche Veränderungen führen daher nicht dazu, dass ein Spannungswandler von einem Zustand in einen anderen Zustand überführt wird. Daher verringert diese Ausgestaltung die Anzahl der Eingriffe des Reglers in das Netz.

In einer Ausgestaltung liefert ein Entlade-Anzahl-Zusammenhang eine optimale Anzahl aktiver Versorgungsstränge. Gemäß der Ausgestaltung wird zunächst mindestens ein weiterer Versorgungsstrang aktiviert, insbesondere als Reaktion auf einen raschen Leistungsanstieg, und dann wird erneut ein Entlade-Anpassungs-Schritt durchgeführt. Zwar wird in Kauf genommen, dass möglicherweise zeitweise mehr Versorgungsstränge aktiv sind als es gemäß einem Entlade-Anzahl-Zusammenhang optimal wäre. Jedoch ist es in der Regel wichtiger, eine Überlastung zu vermeiden. Weil der Regler anschließend erneut einen Entlade-Anpassungs-Schritt durchführt, lässt sich anschließend wieder das Optimum von aktiven Versorgungssträngen erzielen.

In einer Ausgestaltung werden für jeden Spannungswandler jeweils mindestens ein Last-U-I-Zusammenhang und mindestens ein Ruhe-U-I-Zusammenhang vorgegeben. Jeder U-I-Zusammenhang legt eine vom Spannungswandler zu liefernde Stromstärke abhängig von dem Wert der am Spannungswandler anliegenden Spannung fest. Mindestens in einem Wertebereich für die am Spannungswandler anliegende Spannung liefert bei gleichem Wert für die anliegende Spannung der Last-U-I-Zusammenhang einen höheren Wert für die zu liefernde Stromstärke als der Ruhe-U-I-Zusammenhang. Wenn ein Spannungswandler in einem Lastzustand ist, so arbeitet dieser Spannungswandler gemäß dem oder einem Last-U-I-Zusammenhang. Wenn ein Spannungswandler in einem Ruhezustand ist, so arbeitet dieser Spannungswandler gemäß dem oder einem Ruhe-U-I-Zusammenhang.

Diese Ausgestaltung ermöglicht es, dass jeder Spannungswandler im Lastzustand nahe der Volllast arbeitet, ohne überlastet zu werden. Ein Spannungswandler im Ruhezustand lässt sich bei Bedarf rasch in einen Lastzustand überführen, insbesondere bei einem plötzlichen Leistungsanstieg. Die U-I-Zusammenhänge lassen sich so festlegen, dass der Spannungswandler möglichst wenig Verlustleistung liefert und damit wenig Verlustwärme produziert.

In einer Ausgestaltung wird für jeden Spannungswandler jeweils eine U-I-Kennlinie vorgegeben. Diese U-I-Kennlinie legt die vom Spannungswandler zu liefernde Stromstärke abhängig von der anliegenden Spannung fest und hängt von einem veränderlichen Kennlinien-Parameter ab. Mindestens in einem Wertebereich für die am Spannungswandler anliegende Spannung bei gleichem Wert für die anliegende Spannung ist der von der U-I-Kennlinie festgelegte Wert für die Stromstärke umso größer, je größer der Kennlinien-Parameter ist. Um einen Spannungswandler von einem Ruhezustand in einen Lastzustand zu überführen, wird der Kennlinien-Parameter dieses Spannungswandlers vergrößert. Um einen Spannungswandler von einem Lastzustand in einen Ruhezustand zu überführen, wird der Kennlinien-Parameter dieses Spannungswandlers verkleinert.

Diese Ausgestaltung ermöglicht es, einen Spannungswandler über mehrere Zwischenstufen von einem Zustand in den oder einen anderen Zustand zu überführen. Falls der Kennlinien-Parameter sich kontinuierlich verändern lässt, so lässt sich der Spannungswandler sogar stufenlos von dem einen Zustand in den anderen Zustand überführen. Die Ausgestaltung führt somit dazu, dass der Zustand des Netzes allmählich verändert wird. Er lässt sich an eine sich allmählich verändernde Leistungsaufnahme des Verbrauchers anpassen, und zwar bevorzugt kontinuierlich und so, dass der Spannungswandler stets nahe einem optimalen Betriebspunkt arbeitet. Die Geschwindigkeit, mit der der Zustand des Netzes verändert wird, hängt von der Geschwindigkeit ab, mit welcher der Kennlinien-Parameter verändert wird, und lässt sich daher steuern.

Natürlich kann die U-I-Kennlinie auch in umgekehrter Weise vom Kennlinien-Parameter abhängen, d.h. der Wert der Stromstärke ist umso größer, je kleiner der Wert des Kennlinien-Parameters ist.

Möglich ist, dass mindestens einmal mindestens ein Versorgungsstrang vom Verbraucher getrennt wird, beispielsweise weil der Versorgungsstrang überhitzt ist oder weil eine Störung in diesem Versorgungsstrang aufgetreten ist, insbesondere wenn die Spannungsquelle dieses Versorgungsstrangs defekt ist. Auf dieses Ereignis reagiert der Regler in einer Ausgestaltung wie folgt: Der Regler führt erneut einen Entlade-Anpassungs-Schritt durch. Hierbei wird der oder jeder getrennte Versorgungsstrang nicht ausgewählt. Die N Versorgungsstränge, deren Spannungswandler im Lastzustand betrieben werden, werden also unter den maximal N_ges - 1 verbleibenden und nicht getrennten Versorgungssträngen ausgewählt.

Möglich ist, dass der abgetrennte Versorgungsstrang vor dem Trennen dazu beigetragen hat, den Verbraucher elektrisch zu versorgen. Gemäß dieser Ausgestaltung wird erneut ein Entlade-Anpassungs-Schritt durchgeführt, wobei der abgetrennte Versorgungsstrang von der Auswahl ausgeschlossen ist. Dadurch wird einerseits sichergestellt, dass der Verbraucher ausreichend versorgt ist. Andererseits werden die Leistungsverluste durch die Spannungswandler verringert.

Lösungsgemäß lässt sich ein Spannungswandler eines Versorgungsstrangs wahlweise in einem Lastzustand und in einem Ruhezustand betreiben. In einer Ausgestaltung umfasst der Spannungswandler Leistungssteller, beispielsweise Schaltelemente in Form von IGBT-Transistoren oder MOS-FET-Transistoren, sowie einen eigenen Regler für diese Leistungssteller. Wenn der Spannungswandler im Ruhezustand ist, werden die Leistungssteller nicht geschaltet oder sind in einen nicht schaltenden Modus gebracht. Der Leistungssteller-Regler wird aber weiterhin mit Strom versorgt. Daher kann der Leistungssteller-Regler jederzeit den Spannungswandler in einen Lastzustand schalten, wenn der Leistungssteller-Regler entsprechend von dem übergeordneten Regler angesteuert wird

In einer Ausgestaltung versorgen die N_ges Spannungsquellen zeitweise den elektrischen Verbraucher und werden zeitweise ihrerseits von mindestens einer weiteren Spannungsquelle aufgeladen, beispielsweise von einem elektrischen Generator oder eine Brennstoffzellenanlage. Jede Spannungsquelle des Netzes vermag also wahlweise elektrische Energie an den Verbraucher abzugeben oder elektrische Energie von der weiteren Spannungsquelle aufzunehmen und zu speichern. In dieser Ausgestaltung ist jeder Versorgungsstrang dauerhaft oder wenigstens zeitweise mit der weiteren Spannungsquelle verbunden.

In einer bevorzugten Ausführungsform wird mindestens einmal ein Auflade-Schritt durchgeführt. Dieser umfasst folgende Schritte:
- Der Regler wählt M Versorgungsstränge des Netzes aus.
- Der Regler steuert die Spannungswandler der N_ges Versorgungsstränge so an, dass mindestens die Spannungswandler der ausgewählten M Versorgungsstränge in dem oder einem Ruhezustand sind.
- Die Spannungsquellen der ausgewählten M Versorgungsstränge werden von der weiteren Spannungsquelle aufgeladen.

Diese Ausgestaltung ermöglicht es, dass die weitere Spannungsquelle den Verbraucher nicht oder nicht ausschließlich direkt elektrisch versorgt, sondern indirekt über die Spannungsquellen der Versorgungsstränge. Damit ist es nicht erforderlich, einen zusätzlichen Spannungswandler vorzusehen, der Strom von der weiteren Spannungsquelle direkt in Strom für den Verbraucher umwandelt. Möglich ist, dass die weitere Spannungsquelle mit dem Verbraucher elektrisch verbunden ist und daher über die Spannungswandler der Versorgungsstränge auch mit den Spannungswandlern der Versorgungsstränge. Diese Spannungswandler sind bevorzugt bidirektional ausgestaltet.

Auch das Aufladen der Spannungsquellen erfordert keinen Stelleingriff eines Benutzers. Vielmehr wählt der Regler in einer Ausgestaltung automatisch M Versorgungsstränge aus und veranlasst, dass die Spannungsquellen der M ausgewählten Versorgungsstränge aufgeladen werden.

Diese Ausgestaltung ermöglicht es weiterhin, im laufenden Betrieb mindestens eine Spannungsquelle eines Versorgungsstrangs aufzuladen, vorausgesetzt die weitere Spannungsquelle ist im laufenden Betrieb mit dem entsprechenden Versorgungsstrang elektrisch verbunden. Dies ist insbesondere dann der Fall, wenn die weitere Spannungsquelle an Bord des Unterwasserfahrzeugs montiert ist, beispielsweise ein Generator oder eine Brennstoffzellen-Anlage ist.

Die weitere Spannungsquelle kann auch räumlich entfernt von dem Unterwasserfahrzeug angeordnet sein, beispielsweise an Bord eines Überwasserschiffs oder einer sonstigen Plattform. Auch in dieser Ausgestaltung wird der elektrische Verbraucher weiterhin mit Strom versorgt, während die M ausgewählten Spannungsquellen aufgeladen werden.

Während die M ausgewählten Spannungsquellen der Versorgungsstränge aufgeladen werden, sind in einer Ausgestaltung die übrigen N_ges - M Spannungsquellen deaktiviert. In einer anderen Ausgestaltung bleiben die ausgewählten N Spannungsquellen aktiv und versorgen den Verbraucher mit elektrischem Strom.

Um eine Spannungsquelle aufzuladen, ist es nicht erforderlich, einen Leistungsschalter umzulegen. Dank der Erfindung reicht es aus, den verbundenen Spannungswandler in den Ruhestand zu versetzen oder ihn im Ruhezustand oder im Lastzustand zu belassen - je nachdem ob die Spannungsquelle eines Versorgungsstrangs über den Spannungswandler dieses Versorgungsstrangs oder auf einem anderen Wege elektrisch mit der weiteren Spannungsquelle verbunden ist. Vorzugsweise wird weiterhin verhindern, dass dieser Versorgungsstrang zum Entladen ausgewählt wird, solange seine Spannungsquelle aufgeladen wird. Möglich wird, dass der Regler eine Spannungsquelle dann zum Aufladen auswählt, wenn ihr Zustand es erfordert. Möglich, aber nicht erforderlich ist eine spezielle Aufladephase für die Spannungsquellen.

Vorzugsweise werden diejenigen Spannungsquellen der Versorgungsstränge ausgewählt, die am stärksten entladenden sind. Allgemein führt der Regler bei der Auswahl der M aufzuladenden Spannungsquellen vorzugsweise folgende Schritte durch:
- Der Regler ermittelt eine Soll-Anzahl M_opt von aufzuladenden Spannungsquellen, wobei M_opt kleiner oder gleich N_ges ist.
- Der Regler wendet bei der Auswahl der M Versorgungsstränge ein vorgegebenes und von den Zuständen der Versorgungsstränge abhängendes Belade-Auswahl-Kriterium an. Hierbei ist M kleiner oder gleich M_opt

Vorzugsweise hängt diese Soll-Anzahl M_opt von einem Leistungsparameter der weiteren Spannungsquelle ab. Diese Ausgestaltung ermöglicht es, die weitere Spannungsquelle in einem optimalen Betriebszustand zu betreiben, wobei dieser Betriebszustand von dem Leistungsparameter abhängt. Außerdem wird vermieden, dass die weitere Spannungsquelle überlastet wird.

Das Unterwasserfahrzeug mit dem lösungsgemäßen elektrischen Netz kann ein bemanntes oder ein unbemanntes Unterwasserfahrzeug sein. Es kann einen eigenen Antrieb aufweisen oder ohne einen eigenen Antrieb auskommen. Der eigene Antrieb kann Bestandteil des elektrischen Verbrauchers sein, welcher von den Versorgungssträngen versorgt wird. Das Unterwasserfahrzeug kann für militärische und / oder zivile Zwecke ausgestaltet sein.

Der elektrische Verbraucher kann eine Vielzahl einzelner Verbraucher enthalten. Vorzugsweise ist mindestens ein einzelner Verbraucher ein elektrischer Fahrmotor, welcher mindestens eine Welle für den oder einen Propeller des Unterwasserfahrzeugs dreht. Mindestens ein weiterer elektrischer Verbraucher kann ein elektrischer Stellantrieb oder einen Sensor oder ein Aktor, z.B. ein Greifer, sein.

Jeder Spannungswandler wandelt Strom in der Spannung, mit welcher der verbundene Spannungsquelle elektrische Energie bereitstellt, in Strom in der Spannung um, in welcher der Verbraucher Strom aufnehmen kann. Der Verbraucher kann Gleichstrom oder Wechselstrom aufnehmen. Ein Spannungswandler kann je nach Ausgestaltung Gleichstrom in Gleichstrom oder Gleichstrom in Wechselstrom oder Wechselstrom in Wechselstrom umwandeln. In einer Ausgestaltung ist das Netz ein reines Gleichstromnetz und enthält Verbraucher in Form von Teilnetzen, die Wechselstrom verbrauchen.

Die Spannungsquellen von mindestens zwei Versorgungssträngen liefern in einer Ausgestaltung Strom mit unterschiedlichen Nennspannungen. Die Spannungswandler sind entsprechend unterschiedlich ausgelegt und liefern Strom mit der Spannung, in welcher der Verbraucher den Strom aufnehmen kann.

In einer Ausgestaltung ist mindestens ein Spannungswandler, bevorzugt jeder Spannungswandler, ein bidirektionaler Spannungswandler und vermag Strom, welchen eine weitere Spannungsquelle und / oder der elektrische Verbraucher abgibt, in die mit dem Spannungswandler verbundene Spannungsquelle einzuspeisen und dadurch diese Spannungsquelle wieder aufzuladen.

Weiterhin sind folgende Beispiele offenbart:
Gemäß einem ersten Beispiel kann der Regler
   - automatisch überwachen, ob die Leistungsaufnahme P des Verbrauchers sich seit dem zeitlich letzten Entlade-Anpassungs-Schritt so verändert hat, dass ein vorgegebenes Entlade-Durchführungs-Kriterium (EDK) erfüllt ist, und
   - mindestens dann, wenn die Veränderung der Leistungsaufnahme das Entlade-Durchführungs-Kriterium (EDK) erfüllt, erneut einen Entlade-Anpassungs-Schritt durchführen.
Gemäß einem zweiten Beispiel, das auch mit dem vorherigen Beispiel kombinierbar ist, kann der Regler
   - automatisch überwachen, ob ein Betriebszustand eines Versorgungsstrangs (VS.1, ..., VS.N_ges) sich seit dem zeitlich letzten Entlade-Anpassungs-Schritt so verändert hat, dass ein vorgegebenes Auswahl-Durchführungs-Kriterium (EDK(N)) erfüllt ist, und
   - mindestens dann, wenn die Veränderung mindestens eines Betriebszustands das vorgegebene Auswahl-Kriterium (EDK(N)) erfüllt, erneut die Schritte durchführen, N Versorgungsstränge (VS.i(1), ..., VS.i(N)) auszuwählen und die Spannungswandler (G.i(1), ..., G.i(N)) der N ausgewählten Versorgungsstränge (VS.i(1), ..., VS.i(N)) in jeweils einen Lastzustand zu versetzen.

Gemäß einem dritten Beispiel, in Abhängigkeit von dem ersten oder zweiten Beispiel, kann die Auswahl der N Versorgungsstränge (VS.i(1), ..., VS.i(N)) unverändert bleiben, solange der Regler festgestellt hat, dass die Veränderung der Leistungsaufnahme (P) und / oder die Veränderung der Betriebszustände das jeweilige Durchführungs-Kriterium (EDK, EDK(N)) nicht erfüllt.

Gemäß einem vierten Beispiel, das auch mit den vorherigen Beispielen kombinierbar ist, kann mindestens einmal als Reaktion auf das Ereignis, dass nach einem Entlade-Anpassungs-Schritt die Leistungsaufnahme P des Verbrauchers angestiegen ist, die Schritte durchgeführt werden, dass
- mindestens einer der aktuell nicht ausgewählten N_ges - N Versorgungsstränge ausgewählt wird,
- der Spannungswandler des oder jedes zusätzlich ausgewählten Versorgungsstrangs in den oder einen Lastzustand versetzt wird und
- der Regler (1) anschließend erneut einen Entlade-Anpassungs-Schritt durchführt.

Gemäß einem fünften Beispiel, das auch mit den vorherigen Beispielen kombinierbar ist, kann mindestens einmal mindestens ein Versorgungsstrang (VS.1, ..., VS.N_ges) vom Verbraucher getrennt werden und der Regler als Reaktion auf das Trennen erneut einen Entlade-Anpassungs-Schritt durchgeführen, wobei der oder jeder getrennte Versorgungsstrang nicht ausgewählt wird.

Gemäß einem sechsten Beispiel, das auch mit den vorherigen Beispielen kombinierbar ist, kann der Spannungswandler (G.1, ..., G.N_ges) eines Versorgungsstrangs (VS.1, ..., VS.N_ges)
- mehrere Schaltelemente und
- ein Steuergerät zum Ansteuerung dieser Schaltelemente umfassen,
wobei das Steuergerät auch dann mit elektrischem Strom versorgt wird, wenn der Spannungswandler (G.1, ..., G.N_ges) sich in dem oder einem Ruhezustand befindet.

Gemäß einem siebten Beispiel besitzt der Regler des Unterwasserfahrzeugs wenigstens zeitweise Lesezugriff
- auf einen automatisch auswertbaren Entlade-Anzahl-Zusammenhang (EAZ) und
- auf ein von den Zuständen der N_ges Versorgungsstränge (VS.1, ..., VS.N_ges) des Netzes abhängendes Entlade-Auswahl-Kriterium (EAK)
wobei der Entlade-Anzahl-Zusammenhang (EAZ) für eine Vielzahl von möglichen Werten für die Leistungsaufnahme P des Verbrauchers (2) jeweils eine Soll-Anzahl N_opt = N_opt(P) von gleichzeitig aktiven Versorgungssträngen des Netzes festlegt, und wobei der Regler (1) dazu ausgestaltet ist, bei dem Schritt, N Versorgungsstränge (VS.i(1), ..., VS.i(N)) auszuwählen, die Schritte durchzuführen,
- eine Soll-Anzahl N_opt(P) zu ermitteln, welche der Entlade-Anzahl-Zusammenhang (EAZ) der aktuellen Leistungsaufnahme P des Verbrauchers (2) zuordnet, und
- die Auswahl der N Versorgungsstränge (VS.i(1), ..., VS.i(N)) unter Anwendung des Entlade-Auswahl-Kriteriums (EAK) durchzuführen, wobei N größer oder gleich N_opt(P) ist.

Nachfolgend sind das erfindungsgemäße Verfahren sowie das elektrische Netz des erfindungsgemäßen Unterwasserfahrzeugs anhand eines in den Zeichnungen dargestellten Ausführungsbeispiels näher erläutert. Hierbei zeigen:
Fig. 1 schematisch einen Schaltplan des elektrischen Netzes, in welchem die Erfindung eingesetzt wird
Fig. 2 schematisch die Abhängigkeit der Stromstärke von der Spannung bei einer Anwendung, in der die Erfindung nicht angewendet wird;
Fig. 3 zwei beispielhaften U-I-Kennlinien für einen Gleichspannungswandler
Fig. 4 ein beispielhaftes Flussdiagramm zur Durchführung des Verfahrens;
Fig. 5 schematisch die Abhängigkeit der Stromstärke von der Spannung bei einer Anwendung, in der die Erfindung angewendet wird;
Fig. 6 eine Ausschnitts-Vergrößerung aus Fig. 5 sowie beispielhaft die U-I-Kennlinien von zwei Gleichspannungswandlern, während der Verbraucher von N Spannungsquellen versorgt wird;
Fig. 7 die Ausschnitts-Vergrößerung von Fig. 6, während M Spannungsquellen aufgeladen werden.

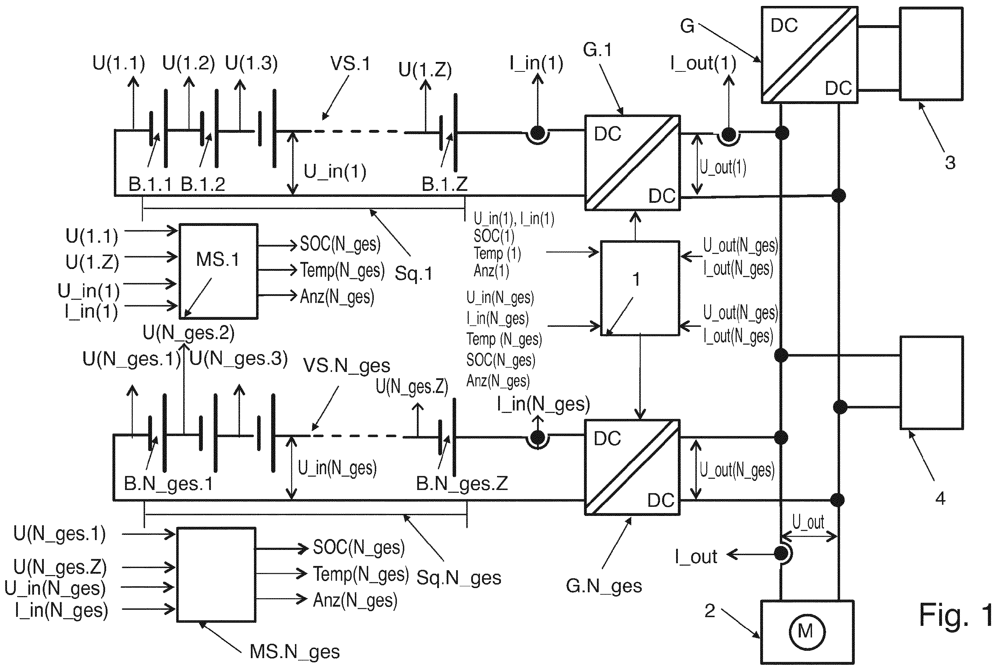

In Fig. 1 zeigt schematisch einen Schaltplan des elektrischen Netzes, in welchem die Erfindung eingesetzt wird. Dieses elektrische Netz ist an Bord eines bemannten Unterseeboots installiert. In Fig. 1 werden folgende Bestandteile dieses elektrischen Netzes gezeigt:
- ein elektrischer Verbraucher 2, der mit Gleichstrom einer Spannung U_out versorgt wird und elektrische Leistung verbraucht, wobei der Verbraucher 2 mehrere einzelne Verbraucher umfasst, beispielsweise einen Fahrmotor für das Unterseeboot,
- N_ges Versorgungsstränge VS.1, ..., VS.N_ges, wobei N_ges größer oder gleich 2 ist und beispielsweise gleich 22 ist,
- eine weitere Spannungsquelle 3 in Form einer Brennstoffzellenanlage,
- eine weitere Spannungsquelle 4 in Form eines Generators,
- einen Gleichspannungswandler G, der die weitere Spannungsquelle 3 mit dem Verbraucher 2 sowie mit den N_ges Versorgungssträngen verbindet, und
- einen übergeordneten Regler 1.

Die N_ges Versorgungsstränge VS.1, ..., VS.N_ges sind parallel angeordnet und versorgen zusammen den elektrischen Verbraucher 2. Die beiden weiteren Spannungsquellen 3 und 4 sind parallel zu den N_ges Versorgungssträngen VS.1, ..., VS.N_ges geschaltet und vermögen die Spannungsquellen der N_ges Versorgungsstränge VS.1, ..., VS.N_ges aufzuladen sowie ebenfalls den Verbraucher 2 elektrisch zu versorgen. Ein Gleichspannungswandler G wandelt die Gleichspannung von der Brennstoffzellenanlage 3 in die Gleichspannung um, welche der Verbraucher 2 benötigt. Der Generator 4 liefert ohne einen Spannungswandler direkt die Gleichspannung, welche der Verbraucher 2 benötigt

In der Ausführungsform, die in Fig. 1 gezeigt wird, werden im regulären Betrieb keine Leistungsschalter benötigt. Vielmehr sind alle N_ges Versorgungsstränge VS.1, ..., VS.N_ges im regulären Betrieb stets mit dem Verbraucher 2 elektrisch verbunden, es sei denn, ein Versorgungsstrang ist defekt und daher abgetrennt.

Jeder Versorgungsstrang VS.i (i = 1, ..., N_ges) umfasst folgende Bestandteile:
- eine Abfolge von Z Batterien B.i.1, ..., B.i.Z, die in Reihe geschaltet sind und zusammen die Spannungsquelle Sq.i des Versorgungsstrangs VS.i bilden,
- ein signalverarbeitendes Batterie-Management-System MS.i, welches die aktuellen Spannungswerte und weitere Signale von den einzelnen Batterien B.i.1, ..., B.i.Z erhält, und
- einen bidirektionalen Gleichspannungswandler G.i, welcher die von der Spannungsquelle Sq.i gelieferte Gleichspannung in die vom Verbraucher 2 benötigte Spannung umwandelt und auch die umgekehrte Umwandlung vorzunehmen vermag.

Im Ausführungsbeispiel hat jede Spannungsquelle Sq.i die gleiche Anzahl Z von Batterien, und alle Batterien B.i.1, ..., B.i.Z sind gleichartig aufgebaut. Möglich ist auch, dass die Spannungsquellen unterschiedliche Anzahlen von Batterien oder verschiedene Batterien aufweisen.

In Fig. 1 werden die folgenden gemessenen Werte gezeigt, die an das Batterie-Management-System MS.i (i = 1, ..., N_ges) übermittelt werden:
- der Wert U(i,j) der Spannung, den die Batterie B.i.j des Versorgungsstrangs VS.i aktuell liefert (i = 1, ..., N_ges, j = 1, ..., Z)
- der Wert U_in(i) der Spannung, den der Versorgungsstrang VS.i insgesamt aktuell liefert, wobei die Spannung am Eingang des Gleichspannungswandlers G.i anliegt (i = 1, ..., N_ges) und
- der Wert I_in(i) der Stromstärke, den der Gleichspannungswandler G.i eingangsseitig aufnimmt (i = 1, ..., N_ges).

In Fig. 1 werden weiterhin die folgenden Werte gezeigt, welche das Batterie-Management-System MS.i ermittelt und ausgibt:
- der aktuelle Lade-Zustand SOC(i) der Spannungsquelle Sq.i des Versorgungsstrangs VS.i,
- die aktuelle maximale Betriebstemperatur Temp(i) des Versorgungsstrangs VS.i und
- die Anzahl Anz(i) von Lade-Vorgängen und Entlade-Vorgänge, die bislang für die Spannungsquelle Sq.i durchgeführt worden sind.

Das Batterie-Management-System MS.i übermittelt laufend die Werte SOC(i), Temp(i), Anz(i) an den Regler 1. Außerdem werden die folgenden Werte an den Regler 1 übermittelt:
- der Wert U_out(i) der Spannung, die am Ausgang des Gleichspannungswandlers G.i anliegt (i = 1, ..., N_ges), und
- der Wert I_out der Stromstärke, der von dem Ausgang des Gleichspannungswandlers G.i (i = 1, ..., N_ges) zu dem Eingang des Verbrauchers 2 fließt.

Bei störungsfreiem Betrieb ist U_out(1) = ... = U_out(N_ges) = U_out. Außerdem gilt I_out = I_out(1) + ... + I_out(N_ges) + I_out(Sp.3) + I_out(Sp.4), wobei I_out(Sp.3) die Stärke des von der weiteren Spannungsquelle 3 (Brennstoffzellenanlage) gelieferten Stroms und I_out(Sp.4) die Stärke des von der weiteren Spannungsquelle 4 (Generator) gelieferten Stroms ist.

Abhängig von den erhaltenen Werten steuert der Regler 1 die Gleichspannungswandler G.1,..., G.N_ges der N_ges Versorgungsstränge an. Wie dies geschieht, wird weiter unten gezeigt.

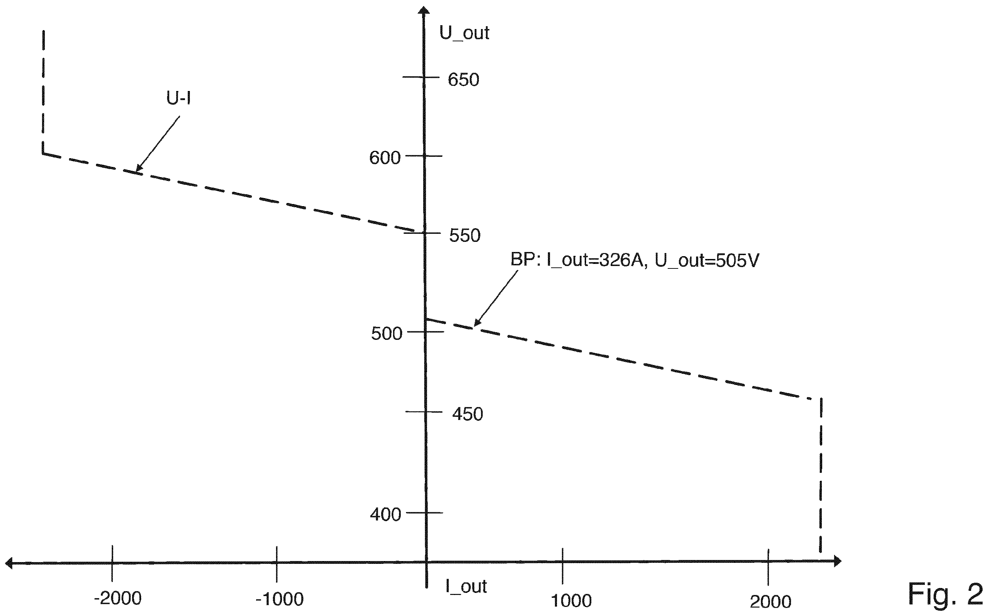

In Fig. 2 wird beispielhaft schematisch die Abhängigkeit der Stromstärke von der Spannung für das Netz von Fig. 1 bei einer Anwendung gezeigt, in der die Erfindung nicht angewendet wird. Auf der x-Achse ist die Gesamt-Stromstärke I_out gezeigt, die in den Verbraucher 2 fließt, auf der y-Achse die Gesamt-Spannung U_out. Ein positiver Wert für die Gesamt-Stromstärke I_out bedeutet, dass die N_ges parallel geschalteten Versorgungsstränge VS.1, ..., VS.N_ges Spannung bereitzustellen, die am Verbraucher 2 anliegt, und Strom von den N Spannungsquellen Sq.i(1), ..., Sq.i(N) der N zugeschalteten Versorgungsstränge VS.i(1), ..., VS.i(N) zum Verbraucher 2 fließt. Ein negativer Wert bedeutet, dass die weitere Spannungsquelle 3 oder 4 die N_ges Versorgungsstränge auflädt. Möglich ist, dass die weitere Spannungsquelle 3 oder 4 beim Aufladen der N Spannungsquellen Sq.i(1), ..., Sq.i(N) zusätzlich den Verbraucher 2 versorgt.

Im Ausführungsbeispiel sind die Spannungswandler G.1, ..., G.N_ges der N_ges Versorgungsstränge VS.1, ..., VS.N_ges bidirektionale Spannungswandler und können wahlweise
- Gleichspannung vom Gleichspannungswandler G oder von der weiteren Spannungsquelle 4 in Gleichspannung für die N Spannungsquellen Sq.i(1), ..., Sq.i(N) oder
- Gleichspannung von den N Spannungsquellen Sq.i(1), ..., Sq.i(N) in Gleichspannung für den Verbraucher 2
umwandeln.

In Fig. 2 wird beispielhaft ein aktueller Betriebspunkt mit einem Wert von 326A für die Gesamt-Stromstärke I_out und einem Wert von 505V für die Gesamt-Spannung U_out gezeigt. Bei N_ges = 22 liefert jeder Versorgungsstrang VS.i Strom mit einer Stromstärke von 326 A / 22 = 14,8 A. Die Gleichspannungswandler werden in einem Zustand zwischen der Volllast und einem Ruhezustand betrieben, so dass insgesamt eine relativ hohe Verlustleistung auftritt.

Die Erfindung führt dazu, dass in vielen Fällen die Verlustleistung, welche durch die Gleichspannungswandler G.1, ..., G.N_ges insgesamt verursacht wird, signifikant reduziert wird. Ein Merkmal der Erfindung ist, dass jeder Gleichspannungswandler G.1, ..., G.N_ges wahlweise in mindestens einem Lastzustand und wahlweise in mindestens einem Ruhezustand betrieben wird. Ob ein Gleichspannungswandler G.1, ..., G.N_ges in einem Lastzustand oder in einem Ruhezustand betrieben wird, hängt von der entsprechenden Ansteuerung ab, die der Regler 1 vornimmt. Falls ein Gleichspannungswandler G.i eines Versorgungsstrangs VS.i in einem Lastzustand arbeitet, so liefert - je nach Ansteuerung des Gleichspannungswandlers G.i - die Spannungsquelle Sq.i (die Batterien B.i.1, ..., B.i.Z) dieses Versorgungsstrangs VS.i Strom für den Verbraucher 2, oder diese Spannungsquelle Sq.i wird aufgeladen. Falls der Gleichspannungswandler G.i sich in einem Ruhezustand befindet, so wird sein lokaler Regler trotzdem mit Spannung versorgt, und der Gleichspannungswandler G.i lässt sich rasch wieder in einen Lastzustand umschalten, indem der lokale Regler Schaltelemente des Gleichspannungswandlers G.i entsprechend ansteuert. Alle Batterien einer Spannungsquelle Sq.i geben entweder gleichzeitig Strom ab oder werden gleichzeitig aufgeladen. Im Folgenden wird eine beispielhafte Ausführungsform beschrieben, wie ein Gleichspannungswandler G.i betrieben und wie sein aktueller Zustand verändert wird.

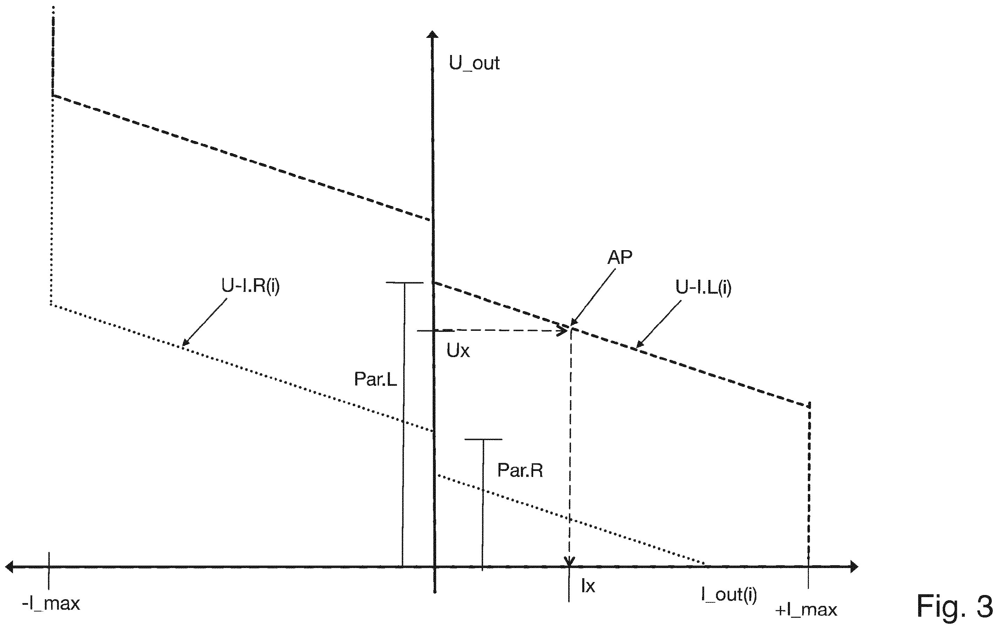

Im Ausführungsbeispiel arbeitet jeder Gleichspannungswandler G.1,..., G.N_ges gemäß einer U-I-Kennlinie. Fig. 3 zeigt beispielhaft die U-I-Kennlinie für einen Gleichspannungswandler G.i. In Fig. 3 wird auf der x-Achse die ausgangsseitige Stromstärke I_out(i) des Gleichspannungswandlers G.i gezeigt und auf der y-Achse die Spannung U_out, welche die N_ges Versorgungsstränge insgesamt bereitstellen und welche am Verbraucher 2 sowie an den N_ges Spannungswandlern G.1,..., G.N_ges anliegt. Der Gleichspannungswandler G.i wird so angesteuert, dass für einen bestimmten Wert für die Spannung U_out der Gleichspannungswandler G.i den durch die U-I-Kennlinie festgelegten Wert für die Stromstärke I_out(i) liefert. Ein positiver Wert für die Stromstärke I_out(i) bedeutet, dass die Spannungsquelle Sq.i den elektrischen Verbraucher 2 auflädt. Ein negativer Wert bedeutet, dass eine weitere Spannungsquelle 3, 4 die Spannungsquelle Sq.i mit Hilfe des Gleichspannungswandlers G.i auflädt.

In Fig. 3 ist beispielhaft ein aktueller Arbeitspunkt AP zu sehen. Bei einem Wert Ux für die Spannung U_out legt die U-I-Kennlinie einen Wert Ix für die ausgangsseitige Stromstärke I_out(i) fest. Für jeden Gleichspannungswandler G.1, ..., G.N_ges. Wird eine eigene U-I-Kennlinie verwendet. Beispielsweise sind im Regler 1 alle U-I-Kennlinien in rechnerverfügbare Weise abgespeichert. Bevorzugt ist in einem Arbeitsspeicher des lokalen Reglers des Gleichspannungswandlers G.i die eigene U-I-Kennlinie abgespeichert. Ein Stelleingriff des Reglers 1 an den Gleichspannungswandler G.i bewirkt, dass diese U-I-Kennlinie verschoben wird.

Lösungsgemäß lässt sich jeder Gleichspannungswandler G.i wahlweise in einem Lastzustand oder in mindestens einem Ruhezustand betreiben, und zwar unabhängig von jedem anderen Gleichspannungswandler. Im Ausführungsbeispiel wird der Zustand, in dem der Gleichspannungswandler G.i betrieben wird, dadurch verändert, dass die U-I-Kennlinie vertikal verschoben wird. Die aktuell verwendete U-I-Kennlinie wird daher durch einen Kennlinien-Parameter beschrieben, beispielsweise durch den kleinsten Wert für die Spannung U_out, bei welchem die Stromstärke I_out(i) größer als Null ist. Diese vertikale Verschiebung bewirkt, dass bei gleichem Wert für die Spannung U_out der festgelegte Wert für die Stromstärke I_out(i) verändert wird. In Fig. 3 werden beispielhaft zwei U-I-Kennlinien gezeigt, nämlich eine U-I-Kennlinie U-I.L(i) für einen Lastzustand und eine U-I-Kennlinie U-I.R(i) für einen Ruhezustand. Zur U-I-Kennlinie U-I.L gehört der Wert Par.L des Kennlinien-Parameters, zur U-I-Kennlinie U-I.R der Wert Par.R. Im Ausführungsbeispiel haben alle U-I-Kennlinien die gleiche Form, aber der Kennlinien-Parameter kann für jeden Gleichspannungswandler aktuell einen anderen Wert aufweisen. Jeder Gleichspannungswandler lässt sich unabhängig von jedem anderen Gleichspannungswandler ansteuern, so dass sich sein Wert für den Kennlinien-Parameter unabhängig von allen anderen Gleichspannungswandlern verändern lässt.

Jeder Gleichspannungswandler G.i des Ausführungsbeispiels ist ein bidirektionaler Spannungswandler. Ein positiver Wert für die Stromstärke I_out(i) bedeutet, dass der Gleichspannungswandler G.i ausgangsseitig Strom abgibt, den der Versorgungsstrang VS.i bereitstellt. Ein negativer Wert für die Stromstärke I_out(i) bedeutet, dass der Gleichspannungswandler G.i eingangsseitig Strom abgibt, mit welchem die Spannungsquelle Sq.i des Versorgungsstrangs VS.i aufgeladen wird. Wie in Fig. 1 ersichtlich ist, vermag die weitere Spannungsquelle 3, 4 den Versorgungsstrang VS.i aufzuladen, vorausgesetzt der Gleichspannungswandler G.i wird so angesteuert, dass seine U-I-Kennlinie einen negativen Wert für die Stromstärke I_out(i) liefert.

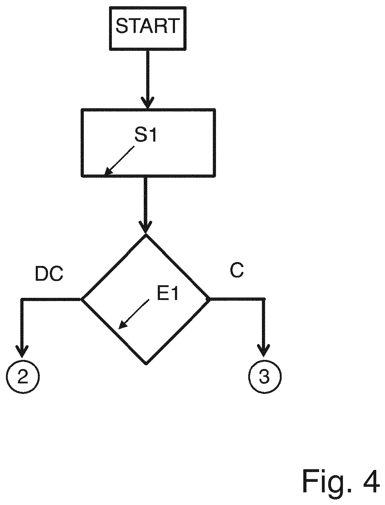

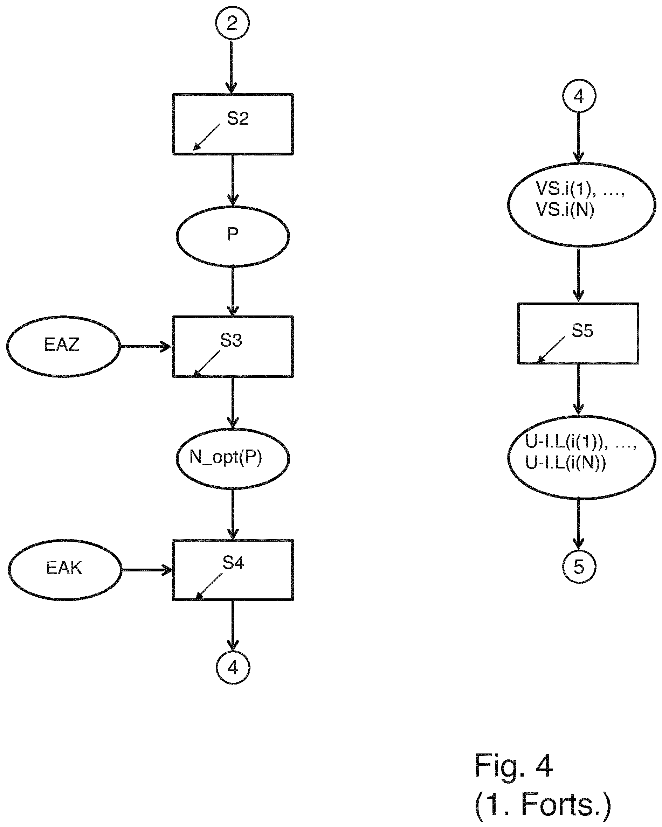

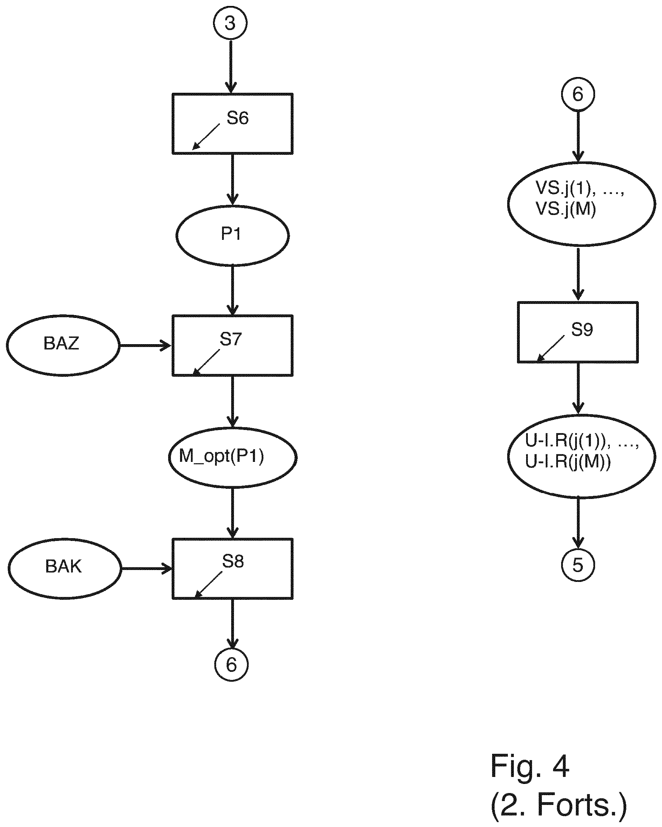

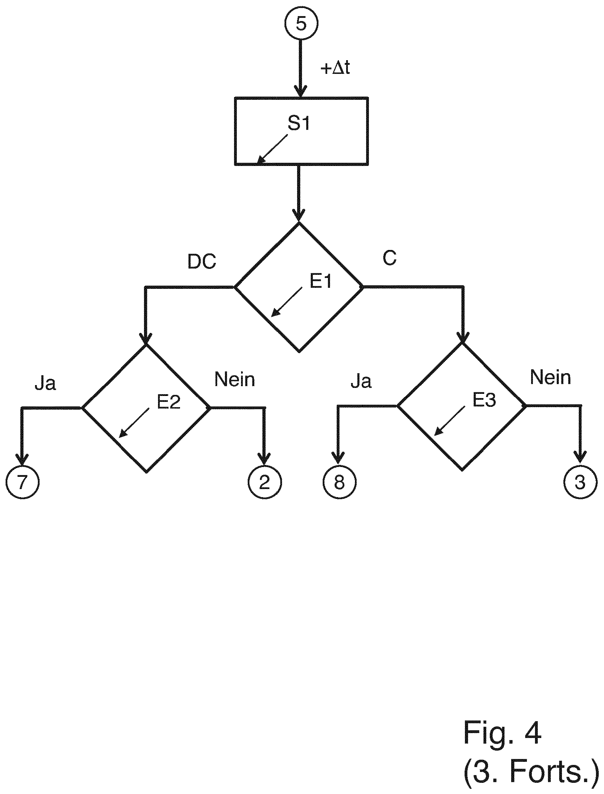

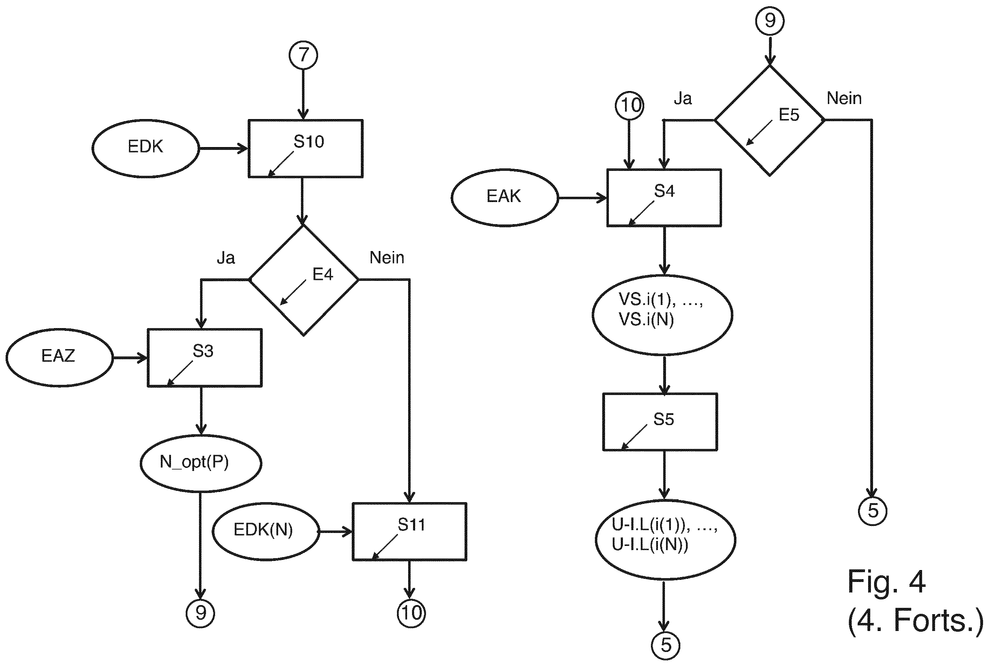

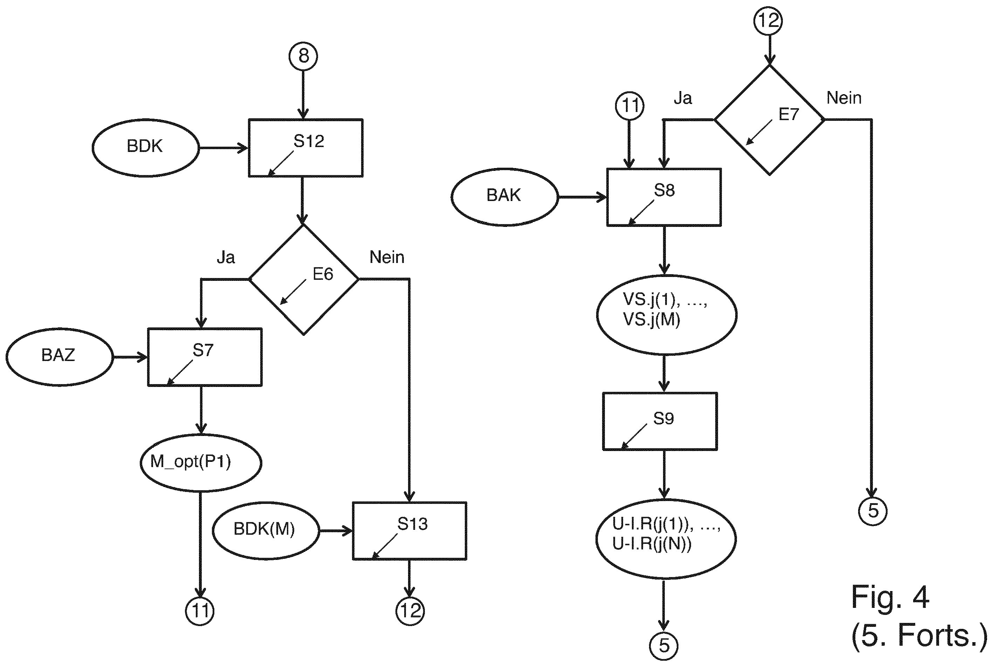

Fig. 4 zeigt ein beispielhaftes Flussdiagramm zur Durchführung des Verfahrens. Hierbei werden folgende Schritte durchgeführt und folgende Zwischenergebnis erzielt:
- Im Schritt S1 prüft der Regler 1, ob aktuell die Spannungsquellen Sq.1, ..., Sq.N_ges der Versorgungsstränge VS.1, ..., VS.N_ges den Verbraucher 2 mit elektrischem Strom versorgen oder ob die Spannungsquellen Sq.1, ..., Sq.N_ges von mindestens einer weiteren Spannungsquelle 3, 4 aufgeladen werden. Diese Entscheidung hängt davon ab, in welche Richtung der Strom fließt, welches Vorzeichen also der Strom I_out hat. Bevorzugt werden die Stromstärke und die Richtung von I_out an den Regler 1 übermittelt.
- Nach der Entscheidung E1 wird das Verfahren entweder mit dem Entladen vom Spannungsquellen fortgesetzt (Zweig "DC", discharge), d.h. der Verbraucher 2 wird von einigen der Spannungsquellen der Versorgungsstränge VS.1, ..., VS.N_ges elektrisch versorgt, oder mit dem Aufladen der Spannungsquellen (Zweig "C", charge), d.h. der Verbraucher 2 wird von mindestens einer der weiteren Spannungsquellen 3, 4 versorgt, und die weitere Spannungsquelle 3, 4 lädt Spannungsquellen der Versorgungsstränge VS.1, ..., VS.N_ges auf. Im Ausführungsbeispiel werden zu jedem Zeitpunkt entweder Spannungsquellen der Versorgungsstränge entladen oder aufgeladen, aber nicht gleichzeitig eine Spannungsquelle entladen und eine andere Spannungsquelle aufgeladen.
- Falls das Verfahren mit dem Zweig "DC" (Entladen) durchgeführt wird, so wird im Schritt S2 die aktuelle elektrische Leistungsaufnahme P durch den Verbraucher 2 ermittelt. In der Regel gilt P = I_out * U_out. Diese Leistungsaufnahme P = P(t) verändert sich in der Regel mit der Zeit, kann also ansteigen oder abfallen. In einer Ausgestaltung wird nur die Spannung U_out oder nur die Stromstärke I_out überwacht, und die Leistungsaufnahme wird abgeleitet. In einem Wechselstromnetz ist es auch möglich, statt der Spannung oder der Stromstärke die Frequenz f zu überwachen.
- Im Schritt S3 ermittelt der Regler 1 automatisch eine optimale Soll-Anzahl N_opt von gleichzeitig aktiven Versorgungssträngen des Netzes. Um dies zu tun, hat der Regler 1 wenigstens zeitweise Lesezugriff auf einen rechnerverfügbaren und automatisch auswertbaren Entlade-Anzahl-Zusammenhang EAZ. Dieser Entlade-Anzahl-Zusammenhang EAZ legt für eine Vielzahl von möglichen Werten für die Leistungsaufnahme P des Verbrauchers 2 jeweils eine Soll-Anzahl N_opt = N_opt(P) von gleichzeitig aktiven Versorgungssträngen fest. Diese gleichzeitig aktiven Versorgungsstränge stellen die elektrische Leistung für den Verbraucher 2 bereit. Die Soll-Anzahl N_opt(P) steigt bei steigender Leistungsaufnahme P.
- Falls die Versorgungsstränge unterschiedliche Anzahlen oder Arten von Batterien aufweisen, so verwendet der Regler 1 einen Entlade-Leistungs-Zusammenhang, der abhängig von der Leistungsaufnahme P des Verbrauchers 2 festlegt, welche elektrische Soll-Nennleistung die Versorgungsstränge insgesamt bereitstellen sollen.
- Im Schritt S4 wählt der Regler 1 automatisch N Versorgungsstränge unter den N_ges Versorgungssträngen VS.1, ..., VS.N_ges des Netzes aus. Hierbei ist N größer oder gleich N_opt(P). Möglich ist, dass der Regler 1 zur Sicherheit stets mindestens einen zusätzlichen Versorgungsstrang auswählt, so dass N größer als N_opt(P) ist.
- Falls die Spannungsquellen unterschiedliche Nenn-Leistungen bereitstellen, etwa wegen unterschiedlicher Anzahlen oder Arten von Batterien, so wählt der Regler 1 N Versorgungsstränge so aus, dass die Spannungsquellen der ausgewählten N Versorgungsstränge zusammen mindestens die ermittelte Soll-Nennleistung bereitstellen.
- Um die N Versorgungsstränge auszuwählen, wendet der Regler 1 ein vorgegebenes Entlade-Auswahl-Kriterium EAK an. Weiter unten wird beschrieben, wovon dieses Entlade-Auswahl-Kriterium EAK abhängen kann. Die N ausgewählten Versorgungsstränge werden mit VS.i(1), ..., VS.i(N) bezeichnet.
- Falls ein Versorgungsstrang aktuell nicht mit dem Verbraucher 2 verbunden ist, beispielsweise weil der Versorgungsstrang abgeschaltet oder mit einem Leistungsschalter abgetrennt ist, so wird dieser abgetrennte Versorgungsstrang nicht ausgewählt, und die Auswahl wird auf die verbleibenden N_ges - 1 Versorgungsstränge eingeschränkt.
- Im Schritt S5 steuert der Regler 1 die Gleichspannungswandler der Versorgungsstränge des Netzes so an, dass die Gleichspannungswandler G.i(1), ..., G.i(N) der ausgewählten N Versorgungsstränge VS.i(1), ..., VS.i(N) in einem Lastzustand und die übrigen Gleichspannungswandler in einem Ruhezustand versetzt werden oder verbleiben. In einer Ausgestaltung bewirkt der Regler 1, dass der jeweilige Kennlinien-Parameter des Gleichspannungswandlers G.i(1), ..., G.i(N) jedes ausgewählten Versorgungsstrangs VS.i(1), ..., VS.i(N) auf einen großen Wert und der Kennlinien-Parameter eines Gleichspannungswandlers eines nicht ausgewählten Versorgungsstrangs auf einen kleinen Wert gestellt wird, vgl. Fig. 3. In Fig. 4 werden die U-I-Kennlinien der im Lastzustand betrieben Gleichspannungswandler G.i(1), ..., G.i(N) der N ausgewählten Versorgungsstränge VS.i(1), ..., VS.i(N) angedeutet.
- Beim Beladen (Zweig "C" von Entscheidung E1) wird zunächst in Schritt S6 festgestellt, welche Leistung P1 die weitere Spannungsquelle 3 und / oder 4 aktuell abgeben kann.
- Im Schritt S7 wendet der Regler 1 einen vorgegebenen Belade-Anzahl-Zusammenhang BAZ an, um eine optimale Soll-Anzahl M_opt(P1) von gleichzeitig zu beladenden Spannungsquellen festzulegen. Diese Soll-Anzahl M_opt(P1) hängt von der ermittelten Leistung P1 ab. Sie kann weiterhin vom aktuellen Betriebszustand der weiteren Spannungsquelle 3 und / oder 4 abhängen und auch davon, ob das Unterseeboot aktuell an eine externe Spannungsquelle angeschlossen ist oder nicht.
- Im Schritt S8 wendet der Regler 1 ein vorgegebenes Belade-Auswahl-Kriterium BAK an, um unter den N_ges Versorgungssträngen diejenigen M Versorgungsstränge auszuwählen, deren Spannungsquellen aufgeladen werden sollen. Hierbei ist M bevorzugt kleiner oder gleich M_opt(P1), um eine Überlastung der weiteren Spannungsquellen 3 und 4 zu verhindern und um sicherzustellen, dass die weitere Spannungsquellen 3 und 4 zeitgleich den Verbraucher 2 versorgen kann. Die M zum Beladen ausgewählten Versorgungsstränge werden mit VS.j(1), ..., VS.j(M) bezeichnet.
- Im Schritt S9 steuert der Regler 1 die Gleichspannungswandler der Versorgungsstränge des Netzes so an, dass die Gleichspannungswandler G.j(1), ..., G.j(M) der ausgewählten M Versorgungsstränge VS.j(1), ..., VS.j(M) in einem Lastzustand sind. Diese ausgewählten Gleichspannungswandler G.j(1), ..., G.j(M) wandeln Gleichstrom von der weiteren Spannungsquelle 3 und oder 4 in Gleichstrom für die Spannungsquellen Sq.j(1), ..., Sq.j(M) um. Die Gleichspannungswandler der übrigen Versorgungsstränge werden bevorzugt in einem Ruhezustand verbracht.

Die Schritte S1 sowie S2 bis S5 (beim Entladen) bzw. S6 bis S9 (beim Beladen) werden einmal durchgeführt, nachdem der Betrieb des elektrischen Netzes von Fig. 1 begonnen wird. Anschließend werden der Schritt S1 und die Entscheidung E1 wiederholt erneut durchgeführt, beispielsweise mit einer vorgegebenen Abtastrate und somit mit einem Zeitabstand von Δt. Abhängig vom Ergebnis wird dann ein Entlade-Anpassungs-Schritt oder ein Belade-Anpassungs-Schritt durchgeführt. Beim Entladen werden zusätzlich folgende Schritte und Entscheidungen durchgeführt:
- Bei der Entscheidung E2 wird geprüft, ob bereits mindestens ein Entlade-Anpassungs-Schritt durchgeführt worden ist oder nicht.
- Bei der Entscheidung E3 wird geprüft, ob bereits mindestens ein Belade-Anpassungs-Schritt durchgeführt worden ist oder nicht.
- Im Schritt S10 prüft der Regler 1, ob die Leistungsaufnahme P des Verbrauchers 2 sich seit der letzten Durchführung eines Entlade-Anpassungs-Schritts so stark verändert hat, dass die Veränderung ein vorgegebenes Entlade-Durchführungs-Kriterium EDK erfüllt. Dieses Entlade-Durchführungs-Kriterium EDK ist beispielsweise dann erfüllt, wenn die prozentuale oder die absolute Veränderung der Leistungsaufnahme P oberhalb einer vorgegebenen Veränderungs-Schranke liegt.
- Durch die Entscheidung E4 wird das Verfahren abhängig vom Ergebnis der Prüfung im Schritt S10 entweder im Zweig "Ja" oder im Zweig "Nein" fortgesetzt. Falls die Leistungsaufnahme P sich erheblich verändert hat (Zweig "Ja"), so wird erneut der Schritt S3 durchgeführt.
- Im Schritt S11 prüft der Regler 1, ob sich der Betriebszustand mindestens eines Versorgungsstrangs seit der letzten Auswahl der N Versorgungsstränge so stark verändert hat, dass diese Veränderung eines Betriebszustandes ein vorgesehenes Entlade-Durchführungs-Kriterium EDK(N) erfüllt. Auch dieses Entlade-Durchführungs-Kriterium EDK(N) kann erfüllt sein, wenn die absolute oder prozentuale Veränderung eines Betriebszustands eine vorgegebene Schranke erfüllt oder wenn ein Wert eines Betriebsparameters eines Versorgungsstrangs außerhalb eines vorgegebenen Bereichs liegt. Der Schritt S11 wird im Ausführungsbeispiel auch dann durchgeführt, wenn der Schritt S10 das Ergebnis erbracht hat, dass die Soll-Anzahl N_opt(P) unverändert bleibt.
- Durch die Entscheidung E5 wird das Verfahren abhängig vom Ergebnis der Prüfung im Schritt S11 entweder im Zweig "Ja" oder im Zweig "Nein" fortgesetzt.
- Falls ein Betriebsparameter sich erheblich verändert hat (Zweig "Ja"), so werden die Schritte S4 und S5 erneut durchgeführt, also erneut N Versorgungsstränge ausgewählt und die Gleichspannungswandler entsprechend angesteuert.

Beim Beladen werden zusätzlich folgende Schritte und Entscheidungen durchgeführt:
- Im Schritt S12 prüft der Regler 1, ob die Leistung P1, welche die weitere Spannungsquelle 3, 4 bereitstellen kann, sich seit dem letzten Belade-Anpassungs-Schritt erheblich verändert hat. Hierfür wendet der Regler 1 ein vorgegebenes Belade-Durchführungs-Kriterium BDK an.
- Abhängig vom Ergebnis der Prüfung im Schritt S12 wird eine Entscheidung E6 getroffen.
- Falls die Leistung P1 sich erheblich verändert hat, so wird erneut der Schritt S7 durchgeführt. Ansonsten wird geprüft, ob sich seit dem letzten Entlade-Anpassungs-Schritt der Betriebszustand mindestens eines Versorgungsstrangs erheblich verändert hat (Schritt S13). Hierfür wendet der Regler 1 ein Belade-Durchführungs-Kriterium EDK(M) an. Weiterhin werden gemäß dem Flussdiagramm die Schritte S8 und S9 durchgeführt, also die aufzuladenden Versorgungsstränge ausgewählt und die Gleichspannungswandler entsprechend angesteuert.

Im Folgenden wird aufgelistet, wovon das Entlade-Auswahl-Kriterium EAK abhängen kann, welches der Regler 1 anwendet, um in einem Schritt S3 N Versorgungsstränge VS.i(1), ..., VS.i(N) auszuwählen. Wie bereits dargelegt, steuert der Regler 1 anschließend im Schritt S4 die Gleichspannungswandler so an, dass die Gleichspannungswandler G.i(1), ..., G.i(N) der N ausgewählten Versorgungsstränge VS.i(1), ..., VS.i(N) im einem Lastzustand und die übrigen Gleichspannungswandler in einem Ruhezustand sind.

Das Entlade-Auswahl-Kriterium EAK kann von den aktuellen Lade-Zuständen der N_ges Versorgungsstränge abhängen. In einer Ausgestaltung wählt der Regler 1 im Schritt S3 diejenigen N Versorgungsstränge aus, deren Spannungsquellen die höchsten Lade-Zustände (states of charge, SOC) aufweisen. In einer anderen Ausgestaltung ermittelt der Regler 1 diejenigen Versorgungsstränge, deren Lade-Zustände oberhalb einer vorgegebenen oder im Betrieb festgelegten Schranke liegen, und nimmt die Auswahl anhand mindestens eines zusätzlichen Kriteriums unter diesen vorausgewählten Versorgungssträngen vor.

Das zusätzliche Kriterium können beispielsweise die aktuellen Betriebstemperaturen der Versorgungsstränge sein. Unter den vorausgewählten Versorgungssträngen wählt der Regler 1 diejenigen N Versorgungsstränge mit dem niedrigsten Betriebstemperaturen aus, also diejenigen, deren Spannungsquellen und / oder deren Gleichspannungswandler aktuell die niedrigsten Betriebstemperaturen aufweisen. Ein anderes Kriterium können beispielsweise die Anzahl der bislang durchgeführten Lade-Vorgänge und Entlade-Vorgänge für die Spannungsquellen sein. Das jeweilige Batterie-Management-System MS.i eines Versorgungsstrangs VS.i vermag diese Anzahlen bereitzustellen.

Das zusätzliche Kriterium kann auch von den Positionierungen der Versorgungsstränge abhängen. Beispielsweise werden Versorgungsstränge dergestalt aktiviert, dass die von ihnen hervorgerufenen Magnetfelder sich wenigstens teilweise gegenseitig kompensieren und nicht verstärken.

Das Belade-Auswahl-Kriterium BAK kann von den aktuellen Lade-Zuständen der N_ges Versorgungsstränge abhängen. In einer Ausgestaltung wählt der Regler 1 im Schritt S3 diejenigen M Versorgungsstränge aus, deren Spannungsquellen die niedrigsten Lade-Zustände aufweisen.

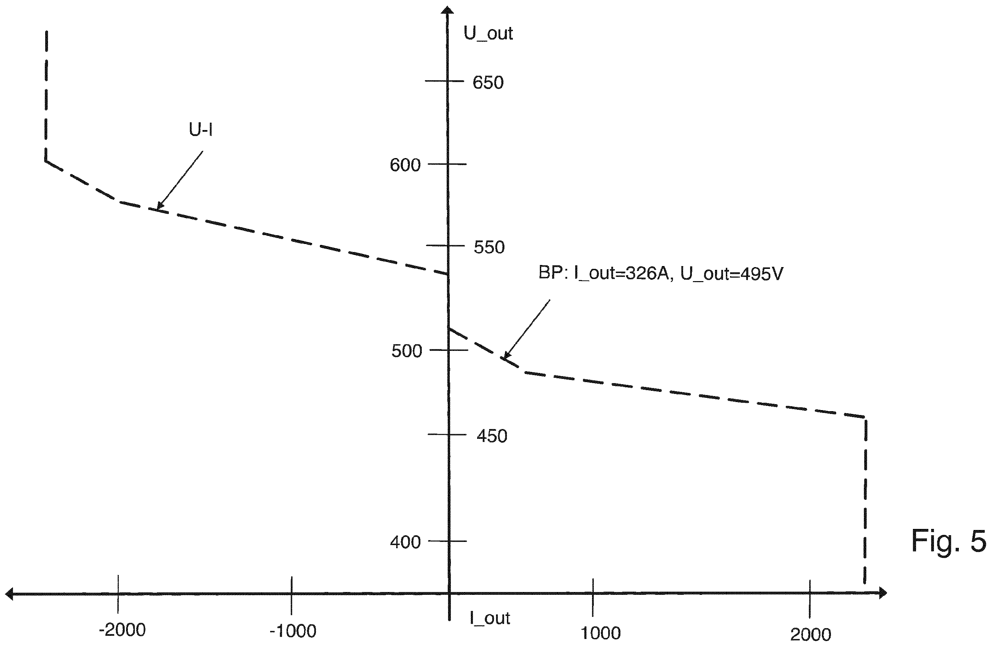

Fig. 5 zeigt beispielhaft eine resultierende U-I-Kennlinie für das elektrische Netz von Fig. 1, wobei der Regler 1 die Erfindung anwendet. Der Betriebspunkt BP ist gegenüber dem Betriebspunkt von Fig. 2 verändert, nämlich auf I_out = 326 A und U_out = 495 V. In der gezeigten Situationen liefert der Schritt S3 das Ergebnis N_opt(P) = 6. Die N = 6 ausgewählten Versorgungsstränge VS.i(1), ..., VS.i(6) werden gleich belastet, nämlich mit I_out(i(1)) = ... = I_out(i(6)) = 326 / 6 ≈ 54,3 A.

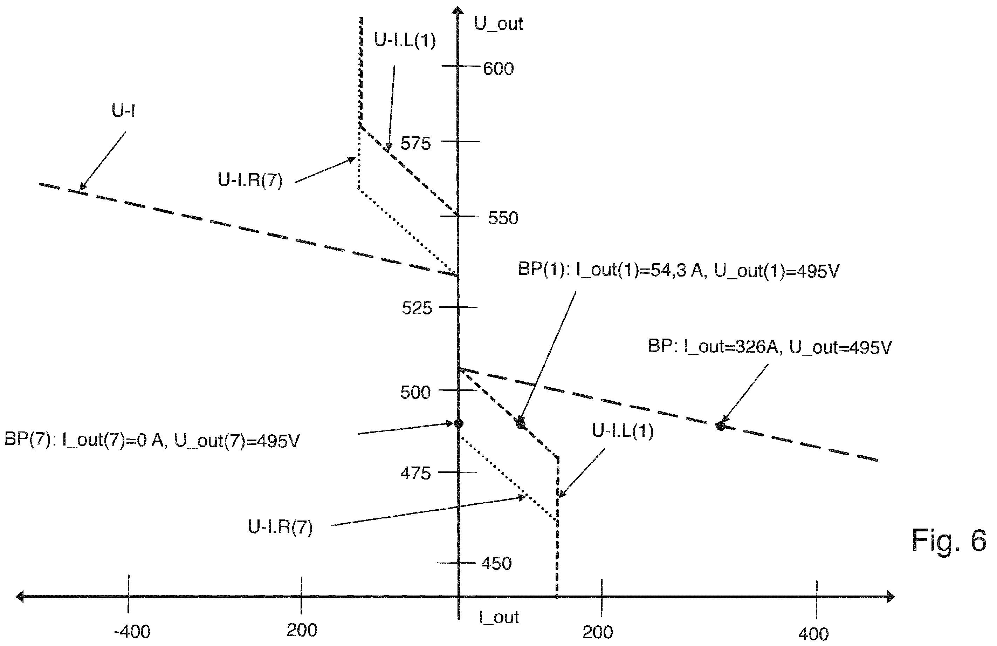

Fig. 6 zeigt eine Ausschnitts-Vergrößerung aus Fig. 5 sowie beispielhaft die U-I-Kennlinien von den beiden Gleichspannungswandlern G.1 und G.7. Im Beispiel von Fig. 5 und Fig. 6 gehört der Versorgungsstrang VS.1 zu den N = 6 ausgewählten Versorgungssträngen und der Versorgungsstrang VS.7 zu den N_ges - N = 22 - 6 = 16 nicht ausgewählten Versorgungssträngen. Der Gleichspannungswandler G.1 des ausgewählten Versorgungsstrangs VS.1 wird daher in einem Lastzustand betrieben und der Gleichspannungswandler G.7 des nicht ausgewählten Versorgungsstrangs VS.7 in einem Ruhezustand. Fig. 6 zeigt die beiden U-I-Kennlinien U-I.L(1) und U-I.R(7) der beiden Gleichspannungswandler G.1 und G.7. Die U-I-Kennlinie U-I.L(1) führt zu einem Lastzustand, die U-I-Kennlinie U-I.R(7) zu einem Ruhezustand. In diesem Beispiel werden die Gleichspannungswandler der nicht ausgewählten Versorgungsstränge nicht belastet (I_out = 0 A). In Fig. 6 sind die beiden Betriebspunkte BP(1) des Gleichspannungswandlers G.1 und BP(7) des Gleichspannungswandlers G.7 eingetragen.

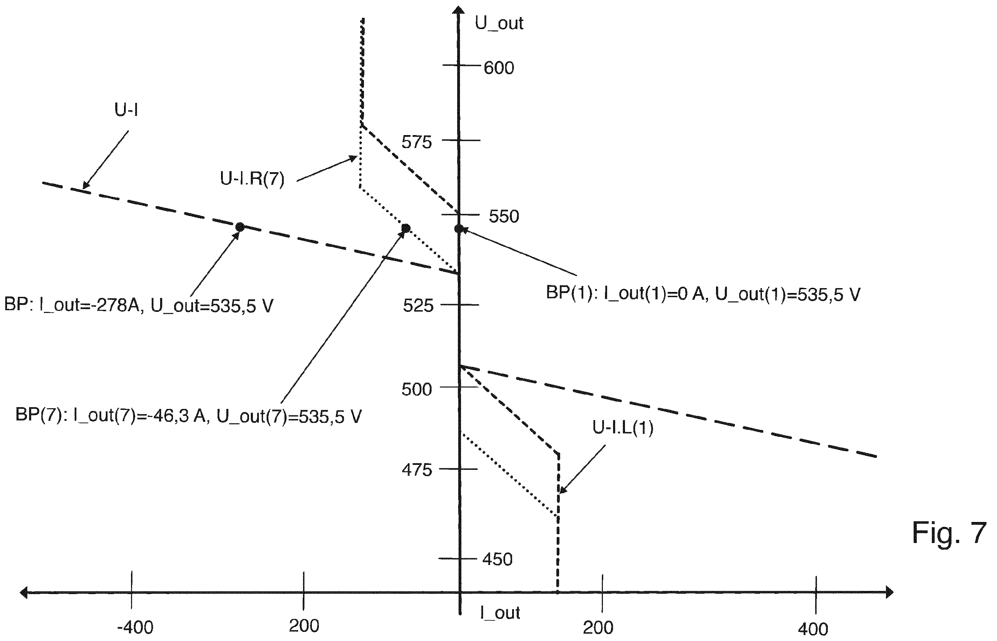

In Fig. 7 wird das Aufladen der N_ges Spannungsquellen illustriert. Die Stromstärke nimmt einen negativen Wert an. Der gezeigte Arbeitspunkt liegt bei I_out = -278 A und U_out = 535,5 V. M = 6 Versorgungsstränge sind ausgewählt, darunter der Versorgungsstrang VS.7. Die Gleichspannungswandler der ausgewählten M Versorgungsstränge VS.j(1), ..., VS.j(6) werden im Lastzustand betrieben. Die Stromstärken I_out(j(1)) = ... = I_out(j(6)) betragen -278A / 6 ≈ -46,3 A. Die Stromstärken der übrigen Gleichspannungswandler betragen 0 A (Ruhezustand).

Im Ausführungsbeispiel ist ein Notbetrieb für den Fall vorgesehen, dass der Regler 1 ausgefallen ist oder nicht mehr mit den Batterie-Management-Systemen MS.1,..., MS.N_ges verbunden ist und daher keine übergeordnete Regelung mehr möglich ist. In diesem Fall arbeitet jeder Gleichspannungswandler G.1, ..., G.N_ges gemäß einer Standard-U-I-Kennlinie. Diese Standard-U-I-Kennlinie resultiert beispielsweise der variablen U-I-Kennlinie von Fig. 2, wobei der Kennlinien-Parameter einen vorgegebenen Standardwert annimmt. Möglich ist auch, dass das Batterie-Management-Systemen MS.i jedes Versorgungsstrangs VS.i den aktuellen Ladezustand SOC(i) ermittelt und aus dem aktuellen Ladezustand SOC(i) einen Wert für den Kennlinien-Parameter herleitet und dem Gleichspannungswandler G.i vorgibt.

**Bezugszeichen**

| | |
|---|---|
| 1 | Regler, erhält Signale von den Batterie-Management-Systemen MS.1, ..., MS.N_ges, steuert die Gleichspannungswandler G.1, ..., G.N_ges an |
| 2 | elektrischer Verbraucher, wird mit Strom der Stromstärke I_out und der Spannung U_out versorgt |
| 3 | weitere Spannungsquelle in Form einer Brennstoffzellenanlage, vermag die Spannungsquellen der Versorgungsstränge VS.1, ..., VS.N_ges über den Gleichspannungswandler G aufzuladen |
| 4 | weitere Spannungsquelle in Form eines Generators, vermag den Verbraucher 2 direkt zu versorgen und die Spannungsquellen der Versorgungsstränge VS.1, ..., VS.N_ges aufzuladen |
| B.i.1, ..., B.i.Z | in Reihe geschaltete Batterien des Versorgungsstrangs VS.i, bilden zusammen die Spannungsquelle Sq.i dieses Versorgungsstrangs VS.i |
| E1 | Entscheidung nach dem Schritt S1, ob die N_ges Spannungsquellen Sq.1, ..., Sq.N_ges den Verbraucher 2 versorgen oder aufgeladen werden sollen |
| E2 | Entscheidung, ob bereits ein Entlade-Anpassungs-Schritt durchgeführt worden ist |
| E3 | Entscheidung, ob bereits ein Belade-Anpassungs-Schritt durchgeführt worden ist |
| E4 | Entscheidung nach dem Schritt S10, ob die Leistungsaufnahme P sich erheblich verändert hat |
| E5 | Entscheidung, ob das Entlade-Durchführungs-Kriterium EDK(N) erfüllt ist |
| E6 | Entscheidung, ob die Leistung P1, welche die weitere Spannungsquelle 3 bereitstellen kann, sich erheblich verändert hat |
| E7 | Entscheidung, ob das Belade-Durchführungs-Kriterium BDK(M) erfüllt ist |
| EAK | Entlade-Auswahl-Kriterium, um N Versorgungsstränge auszuwählen |
| EAZ | Entlade-Anzahl-Zusammenhang, um die optimale Soll Anzahl N_opt(P) zu ermitteln |
| EDK | Entlade-Durchführungs-Kriterium, um zu entscheiden, ob erneut ein Entlade-Auswahl-Schritt durchgeführt wird |
| EDK(N) | Entlade-Durchführungs-Kriterium, um zu entscheiden, ob erneut N Versorgungsstränge ausgewählt werden |
| G | unidirektionaler Gleichspannungswandler zwischen der weiteren Spannungsquelle 3 und dem Verbraucher 2 |
| G.i | bidirektionaler Gleichspannungswandler des Versorgungsstrangs VS.i, zwischen der Spannungsquelle Sq.i und dem Verbraucher 2 angeordnet |
| I_in(i) | eingangsseitige Stromstärke des Gleichspannungswandlers G.i |
| I_out(i) | ausgangsseitige Stromstärke des Gleichspannungswandlers G.i |
| M | Anzahl der in einem Belade- Anpassungs-Schritt ausgewählten Versorgungsstränge. Die Gleichspannungswandler dieser M ausgewählten Versorgungsstränge VS.j(1), ..., VS.j(N) werden in einem Lastzustand betrieben |
| N | Anzahl der in einem Entlade- Anpassungs-Schritt ausgewählten Versorgungsstränge, wobei N >= N_opt(P). Die Gleichspannungswandler dieser N ausgewählten Versorgungsstränge VS.i(1), ..., VS.i(N) werden in einem Lastzustand betrieben |
| N_ges | Anzahl der parallel geschalteten Versorgungsstränge des Netzes |
| N_opt(P) | von der Leistungsaufnahme P des Verbrauchers 2 abhängende Soll-Anzahl von aktiven Versorgungssträngen |
| P | aktuelle Leistungsaufnahme des Verbrauchers 2 |
| P1 | aktuelle mögliche Leistungsabgabe der weiteren Spannungsquelle 3 |
| Par.L | Wert, den der Kennlinien-Parameter bei der U-I-Kennlinie U-I.L(i) annimmt |
| Par.R | Wert, den der Kennlinien-Parameter bei der U-I-Kennlinie U-I.R(i) annimmt |
| S1 | Schritt: prüfen, ob die N_ges Spannungsquellen Sq.1, ..., Sq.N_ges den Verbraucher 2 versorgen oder aufgeladen werden sollen |
| S2 | Schritt: die aktuelle elektrische Leistungsaufnahme P durch den Verbraucher 2 ermitteln |
| S3 | Schritt: optimale Soll-Anzahl N_opt von gleichzeitig aktiven Versorgungssträngen ermitteln |
| S4 | Schritt: N Versorgungsstränge auswählen, N >= N_opt |
| S5 | Schritt: die N_ges Gleichspannungswandler so ansteuern, dass die Gleichspannungswandler der ausgewählten N Versorgungsstränge in einem Lastzustand sind |
| S6 | Schritt: ermitteln, welche Leistung P1 die weitere Spannungsquelle 3 aktuell abgeben kann |
| S7 | Schritt: optimale Soll-Anzahl M_opt(P1) von gleichzeitig zu beladenden Spannungsquellen festlegen |
| S8 | Schritt: M Versorgungsstränge auswählen, deren Spannungsquellen aufgeladen werden sollen |
| S9 | Schritt: die N_ges Gleichspannungswandler so ansteuern, dass die Gleichspannungswandler der ausgewählten M Versorgungsstränge in einem Ruhezustand sind |
| S10 | Schritt: prüfen, ob die Leistungsaufnahme P des Verbrauchers 2 sich erheblich verändert hat |
| S11 | Schritt: prüfen, ob der Betriebszustand eines Versorgungsstrangs sich erheblich verändert hat |
| S12 | Schritt: prüfen, ob die Leistung P1, welche die weitere Spannungsquelle 3 bereitstellen kann, sich erheblich verändert hat |
| S13 | Schritt: prüfen, ob der Betriebszustand mindestens eines Versorgungsstrangs sich erheblich verändert hat |
| SOC(i) | Ladezustand der Spannungsquelle Sq.i |
| Sq.i | Spannungsquelle des Versorgungsstrangs VS.i, umfasst die Batterien B.i.1, ..., B.i.Z, mit dem Gleichspannungswandler G.i verbunden |
| U-I.L(i) | U-I-Kennlinie des Spannungswandlers G.i für einen Lastzustand |
| U-I.R(i) | U-I-Kennlinie des Spannungswandlers G.i für einen Ruhezustand |
| U_out | am Verbraucher 2 anliegende Spannung, liegt in der Regel auch an den Ausgängen aller Gleichspannungswandler G.1, ..., G.N_ges an. |
| U_out(i) | Am Ausgang des Gleichspannungswandlers G. I anliegende Spannung, ist in der Regel gleich der am Verbraucher 2 anliegende Spannung U_out |
| VS.i | Versorgungsstrang, umfasst eine Spannungsquelle Sq.i, ein Batterie-Management-System MS.i und einen Gleichspannungswandler G.i |

## Patentansprüche

1. Verfahren zur automatischen Regelung eines elektrischen Netzes an Bord eines Unterwasserfahrzeugs,
wobei das Netz
- einen elektrischen Verbraucher (2),
- N_ges parallel angeordnete Versorgungsstränge (VS.1, ..., VS.N_ges) und
- einen signalverarbeitenden Regler (1)
umfasst,
wobei N_ges größer oder gleich 2 ist,
wobei jeder Versorgungsstrang (VS.1, ..., VS.N_ges) jeweils
- eine Spannungsquelle (Sq.1, ..., Sq.N_ges) und
- einen Spannungswandler (G.1, ..., G.N_ges)
umfasst und
wobei die Spannungsquelle (Sq.1, ..., Sq.N_ges) jedes Versorgungsstrangs (VS.1, ..., VS.N_ges) über den jeweiligen Spannungswandler (G.1, ..., G.N_ges) dieses Versorgungsstrangs (VS.1, ..., VS.N_ges) mit dem Verbraucher (2) elektrisch verbunden ist und
wobei der Verbraucher (2) mit elektrischem Strom versorgt wird und elektrische Leistung aufnimmt,
wobei der jeweilige Spannungswandler (G.1, ..., G.N_ges) jedes Versorgungsstrangs (VS.1, ..., VS.N_ges) wahlweise in mindestens einem Lastzustand oder in mindestens einem Ruhezustand betrieben wird,
wobei mindestens einmal automatisch ein Entlade-Anpassungs-Schritt durchgeführt wird, der die Schritte umfasst, dass der Regler (1)
- in Abhängigkeit von der aktuellen Leistungsaufnahme P des Verbrauchers (2) unter den N_ges Versorgungssträngen (VS.1, ..., VS.N_ges) des Netzes N Versorgungsstränge (VS.i(1), ..., VS.i(N)) auswählt und
- die Spannungswandler (G.1, ..., G.N_ges) der N_ges Versorgungsstränge (VS.1, ..., VS.N_ges) des Netzes so ansteuert, dass die Spannungswandler (G.i(1), ..., G.i(N)) der N ausgewählten Versorgungsstränge (VS.i(1), ..., VS.i(N)) in jeweils einem Lastzustand und die Spannungswandler der übrigen Versorgungsstränge in jeweils einem Ruhezustand sind,
wobei der Verbraucher (2) von den N Spannungsquellen (Sq.i(1), ..., Sq.i(N)) der N ausgewählten Versorgungssträngen (VS.i(1), ..., VS.i(N)) elektrisch versorgt wird
**dadurch gekennzeichnet, dass**
mindestens einer der nicht ausgewählten Versorgungsstränge der N_ges Versorgungsstränge (VS.1, ..., VS.N_ges) des Netzes mit dem Verbraucher (2) elektrisch verbunden bleibt,
wobei der Spannungswandler dieses nicht ausgewählten Versorgungsstrangs in dem Ruhezustand eingeschaltet ist und sich aus
dem Ruhezustand durch einen Stelleingriff in den Lastzustand überführen lässt;
wobei dieser Versorgungsstrang nach seiner Auswahl durch den Regler dadurch aktiv geschaltet wird, dass sein Spannungswandler von dem Ruhezustand durch den Stelleingriff in den Lastzustand überführt wird, wobei für diesen Schritt ein Leistungsschalter nicht benötigt wird.

2. Verfahren nach Anspruch 1,
**dadurch gekennzeichnet, dass**
der Regler (1) bei dem Entlade-Anpassungs-Schritt die Auswahl der N Versorgungsstränge (VS.i(1), ..., VS.i(N))
- in Abhängigkeit von der aktuellen Leistungsaufnahme P und
- zusätzlich in Abhängigkeit von aktuellen Zuständen der N_ges Versorgungsstränge (VS.1, ..., VS.N_ges) des Netzes
durchführt.

3. Verfahren nach Anspruch 2,
**dadurch gekennzeichnet, dass**
ein automatisch auswertbarer Entlade-Anzahl-Zusammenhang (EAZ) vorgegeben wird,
der für eine Vielzahl von möglichen Werten für die Leistungsaufnahme P des Verbrauchers (2) jeweils eine Soll-Anzahl N_opt = N_opt(P) von gleichzeitig aktiven Versorgungssträngen des Netzes festlegt, und
ein von den Zuständen der N_ges Versorgungsstränge (VS.1, ..., VS.N_ges) des Netzes abhängendes Entlade-Auswahl-Kriterium (EAK) vorgegeben wird, wobei der Schritt, dass der Regler (1) N Versorgungsstränge (VS.i(1), ..., VS.i(N)) auswählt, die Schritte umfasst, dass der Regler (1)
- eine Soll-Anzahl N_opt(P) ermittelt, welche der vorgegebene Entlade-Anzahl-Zusammenhang (EAZ) der aktuellen Leistungsaufnahme P des Verbrauchers (2) zuordnet, und
- die Auswahl der N Versorgungsstränge (VS.i(1), ..., VS.i(N)) abhängig von den Zuständen der N_ges Versorgungsstränge (VS.1, ..., VS.N_ges) unter Anwendung des vorgegebenen Entlade-Auswahl-Kriteriums (EAK) durchführt, wobei N größer oder gleich N_opt(P) ist.

4. Verfahren nach Anspruch 2 oder Anspruch 3,
**dadurch gekennzeichnet, dass**
ein automatisch auswertbarer Leistungsabgabe-Zusammenhang vorgegeben wird, der für eine Vielzahl von möglichen Werten für die Leistungsaufnahme P des Verbrauchers jeweils eine Soll-Gesamt-Nennleistung P_opt(P) der insgesamt von den N_ges Versorgungssträngen (VS.1, ..., VS.N_ges) zu liefernden elektrischen Leistung festlegt,
ein von den Zuständen der N_ges Versorgungsstränge (VS.1, ..., VS.N_ges) des Netzes abhängendes Entlade-Auswahl-Kriterium (EAK) vorgegeben wird, wobei der Schritt, dass der der Regler (1) die N Versorgungsstränge (VS.i(1), ..., VS.i(N)) auswählt, die Schritte umfasst, dass der Regler (1)
- eine Soll-Gesamt-Nennleistung P_opt(P) ermittelt, welche der Leistungsabgabe-Zusammenhang der aktuellen Leistungsaufnahme P des Verbrauchers (2) zuordnet, und
- die N Versorgungsstränge (VS.i(1), ..., VS.i(N)) unter Anwendung des vorgegebenen Entlade-Auswahl-Kriteriums abhängig von den Zuständen der N_ges Versorgungsstränge (VS.1, ..., VS.N_ges) so auswählt, dass diese ausgewählten Versorgungsstränge zusammen mindestens die Soll-Gesamt-Nennleistung P_opt(P) bereitstellen.

5. Verfahren nach einem der Ansprüche 2 bis 4,
**dadurch gekennzeichnet, dass**
der Regler (1) die Auswahl der N Versorgungsstränge (VS.i(1), ..., VS.i(N)) abhängig von
- den Lade-Zuständen (SOC(1), ..., SOC(N_ges)) der N_ges Spannungsquellen (Sq.1, ..., Sq.N_ges),
- den aktuellen Temperaturen (Temp(1), ..., Temp(N_ges)) der N_ges Spannungsquellen (Sq.1, ..., Sq.N_ges),
- den aktuellen Temperaturen der Spannungswandler (G.1, ..., G.N_ges),
- den Anzahlen (Anz(1), ..., Anz(N_ges)) der jeweils bislang durchgeführten Lade-Vorgänge und / oder Entlade-Vorgänge für die N_ges Spannungsquellen (Sq.1, ..., Sq.N_ges) und / oder
- den räumlichen Positionierungen der N_ges Versorgungsstränge (VS.1, ..., VS.N_ges)
durchführt.

6. Verfahren nach Anspruch 5,
**dadurch gekennzeichnet, dass**
der Regler (1) diejenigen N Versorgungsstränge (VS.i(1), ..., VS.i(N)) auswählt, deren Spannungsquellen (Sq.i(1), ..., Sq.i(N)) zum Zeitpunkt der Auswahl die höchsten Lade-Zustände aufweisen.

7. Verfahren nach einem der vorstehenden Ansprüche,
**dadurch gekennzeichnet, dass**
für jeden Spannungswandler (G.i) jeweils mindestens ein Last-U-I-Zusammenhang (U-I.L(i)) und mindestens ein Ruhe-U-I-Zusammenhang (U-I.R(i)) vorgegeben werden,
wobei jeder U-I-Zusammenhang eine vom Spannungswandler (G.i) zu liefernde Stromstärke (I_out(i)) abhängig von dem Wert der anliegenden Spannung (U_out) festlegt,
wobei mindestens in einem Wertebereich für die am Spannungswandler (G.i) anliegende Spannung bei gleichem Wert für die anliegende Spannung der Last-U-I-Zusammenhang (U-I.L(i)) einen höheren Wert für die zu liefernde Stromstärke liefert als der Ruhe-U-I-Zusammenhang (U-I.R(i)),
wobei der Schritt, dass der Regler (1) einen Spannungswandler (G.i) so ansteuert, dass der Spannungswandler (G.i) in einem Lastzustand ist, bewirkt, dass der Spannungswandler (G.i) gemäß dem oder einem Last-U-I-Zusammenhang (U-I.L(i)) arbeitet, und
wobei der Schritt, dass der Regler einen Spannungswandler (G.i) so ansteuert, dass der Spannungswandler (G.i) in einem Ruhezustand ist, bewirkt, dass der Spannungswandler (G.i) gemäß dem oder einem Ruhe-U-I-Zusammenhang (U-I.R(i)) arbeitet.

8. Verfahren nach einem der vorstehenden Ansprüche,
**dadurch gekennzeichnet, dass**
für jeden Spannungswandler (G.i) jeweils eine U-I-Kennlinie vorgegeben ist, welche
- die vom Spannungswandler (G.i) zu liefernde Stromstärke (I_out(i)) abhängig von der anliegenden Spannung (U_out) festlegt und
- von einem veränderlichen Kennlinien-Parameter abhängt,
wobei mindestens in einem Wertebereich für die am Spannungswandler (G.i) anliegende Spannung (U_out) bei gleichem Wert für die anliegende Spannung der von der U-I-Kennlinie festgelegte Wert für die Stromstärke (I_out(i)) umso größer ist, je größer der Kennlinien-Parameter ist,
wobei der Schritt, einen Spannungswandler (G.i) von einem Ruhezustand in einen Lastzustand zu überführen, den Schritt umfasst, den Kennlinien-Parameter dieses Spannungswandlers (G.i) zu vergrößern, und
wobei der Schritt, einen Spannungswandler (G.i) von einem Lastzustand in einen Ruhezustand zu überführen, den Schritt umfasst, den Kennlinien-Parameter dieses Spannungswandlers (G.i) zu verkleinern.

9. Verfahren nach einem der vorstehenden Ansprüche,
**dadurch gekennzeichnet, dass**
jeder Versorgungsstrang (VS.1, ..., VS.N_ges) mit mindestens einer weiteren Spannungsquelle (3, 4) verbunden ist oder zeitweise verbunden wird,
wobei jede Spannungsquelle (Sq.1, ..., Sq.N_ges) des Netzes wahlweise
- elektrische Energie an den Verbraucher (2) abgeben oder
- elektrische Energie von der weiteren Spannungsquelle (3, 4) aufnehmen und speichern kann,
wobei mindestens einmal ein Auflade-Anpassungs-Schritt durchgeführt wird, bei dem
- der Regler (1) M Versorgungsstränge (VS.j(1), ..., VS.j(M)) auswählt und
- die Spannungsquellen (Sq.j(1), ..., Sq.j(M)) der ausgewählten M Versorgungsstränge (VS.j(1), ..., VS.j(M)) von der weiteren Spannungsquelle (3, 4) aufgeladen werden.

10. Verfahren nach Anspruch 9,
**dadurch gekennzeichnet, dass**
der Auflade-Anpassungs-Schritt die zusätzlichen Schritte umfasst, dass
- der Regler (1) die Spannungswandler (G.1, ..., G.N_ges) so ansteuert, dass mindestens die Spannungswandler (G.j(1), ..., G.j(M)) der ausgewählten M Versorgungsstränge (VS.j(1), ..., VS.j(M)) in dem oder einem Lastzustand sind, und
- die Spannungsquellen (Sq.j(1), ..., Sq.j(M)) der ausgewählten M Versorgungsstränge (VS.j(1), ..., VS.j(M)) von der weiteren Spannungsquelle (3, 4) unter Verwendung der im Lastzustand befindlichen Spannungswandler (G.j(1), ..., G.j(M)) der ausgewählten M Versorgungsstränge (VS.j(1), ..., VS.j(M)) aufgeladen werden.

11. Verfahren nach Anspruch 9 oder Anspruch 10,
**dadurch gekennzeichnet, dass**
mindestens ein Auflade-Anpassungs-Schritt die Schritte umfasst, dass
- der Regler (1) eine Soll-Anzahl M_opt von aufzuladenden Spannungsquellen ermittelt und
- der Regler (1) bei der Auswahl der M aufzuladenden Versorgungsstränge (VS.j(1), ..., VS.j(M)) ein vorgegebenes und von den Zuständen der Versorgungsstränge (VS.1, ..., VS.N_ges) des Netzes abhängendes Belade-Auswahl-Kriterium (BAK) anwendet, wobei M kleiner oder gleich M_opt ist.

12. Verfahren nach Anspruch 11,
**dadurch gekennzeichnet, dass**
die Soll-Anzahl M_opt von einem Leistungsparameter der weiteren Spannungsquelle (3) abhängt.

13. Verfahren nach Anspruch 11 oder Anspruch 12,
**dadurch gekennzeichnet, dass**
das Belade-Auswahl-Kriterium (BAK) von
- den Lade-Zuständen (SOC(1), ..., SOC(N_ges)) der Spannungsquellen (Sq.1, ..., Sq.N_ges),
- den aktuellen Temperaturen (Temp(1), ..., Temp(N_ges)) der Spannungsquellen (Sq.1, ..., Sq.N_ges),
- den aktuellen Temperaturen der Spannungswandler (G.1, ..., G.N_ges),
- den Anzahlen (Anz(1), ..., Anz(N_ges)) der jeweils bislang durchgeführten Lade-Vorgänge und / oder Entlade-Vorgänge für die Spannungsquellen (Sq.1, ..., Sq.N_ges) und / oder
- den räumlichen Positionierungen der Versorgungsstränge (VS.1, ..., VS.N_ges)
abhängt.

14. Verfahren nach einem der Ansprüche 9 bis 13,
**dadurch gekennzeichnet, dass**
der Regler (1) dann, wenn ein Versorgungsstrang zu demselben Zeitpunkt
- sowohl zu den N zum elektrischen Versorgen des Verbrauchers (2) ausgewählten Versorgungssträngen (VS.i(1), ..., VS.i(N))
- als auch zu den M zum Beladen ausgewählten Versorgungssträngen (VS.j(1), ..., VS.j(M))
gehört,
automatisch entscheidet,
- entweder den Spannungswandler dieses Versorgungsstranges so anzusteuern, dass er im Lastzustand ist, und einen anderen Versorgungsstrang zum Beladen auszuwählen
- oder den Spannungswandler dieses Versorgungsstrangs so anzusteuern, dass er im Ruhezustand ist, und den Spannungswandler eines anderen Versorgungsstrangs so anzusteuern, dass er vom Ruhezustand in den Lastzustand überführt wird.

15. Unterwasserfahrzeug mit einem elektrischen Netz,
wobei das Netz
- einen elektrischen Verbraucher (2),
- N_ges parallel angeordnete Versorgungsstränge (VS.1, ..., VS.N_ges) und
- einen signalverarbeitenden Regler (1)
umfasst,
wobei N_ges größer oder gleich 2 ist,
wobei jeder Versorgungsstrang (VS.1, ..., VS.N_ges)
- mit dem Verbraucher (2) elektrisch verbunden ist,
- jeweils eine Spannungsquelle (Sq.1, ..., Sq.N_ges) und einen Spannungswandler (G.1, ..., G.N_ges) umfasst und
- dazu ausgestaltet ist, zur Versorgung des Verbrauchers (2) mit elektrischem Strom beizutragen, und
wobei der Verbraucher (2) dazu ausgestaltet ist, elektrische Leistung aufzunehmen,
wobei der Spannungswandler (G.1, ..., G.N_ges) jedes Versorgungsstrangs (VS.1, ..., VS.N_ges) wahlweise in einem Lastzustand oder in einem Ruhezustand betreibbar ist,
wobei der Regler (1) dazu ausgestaltet ist, einen Entlade-Anpassungs-Schritt durchzuführen, der die Schritte umfasst, dass der Regler (1)
- in Abhängigkeit von der aktuellen Leistungsaufnahme P des Verbrauchers (2) unter den N_ges Versorgungssträngen (VS.1, ..., VS.N_ges) des Netzes N Versorgungsstränge (VS.i(1), ..., VS.i(N)) auswählt und
- die Spannungswandler (G.1, ..., G.N_ges) der N_ges Versorgungsstränge (VS.1, ..., VS.N_ges) des Netzes so ansteuert, dass die Spannungswandler (G.i(1), ..., G.i(N)) der N ausgewählten Versorgungsstränge (VS.i(1), ..., VS.i(N)) jeweils in dem Lastzustand und die Spannungswandler der übrigen Versorgungsstränge jeweils in dem Ruhezustand sind,
wobei das Netz so ausgestaltet ist, dass die N Spannungsquellen (Sq.i(1), ..., Sq.i(N)) der N ausgewählten Versorgungsstränge (VS.i(1), ..., VS.i(N)) den Verbraucher (2) elektrisch versorgen, und
wobei wenigstens zeitweise alle N_ges Versorgungsstränge (VS.1, ..., VS.N_ges) des Netzes mit dem Verbraucher (2) verbunden sind,
**dadurch gekennzeichnet, dass** das Netz so ausgestaltet ist, dass mindestens einer der nicht ausgewählten Versorgungsstränge der N_ges Versorgungsstränge (VS.1, ..., VS.N_ges) des Netzes mit dem Verbraucher (2) elektrisch verbunden bleibt, wobei der Spannungswandler dieses nicht ausgewählten Versorgungsstrangs in dem Ruhezustand eingeschaltet ist und sich aus dem Ruhezustand durch einen Stelleingriff in den Lastzustand überführen lässt;
wobei der Regler dazu eingerichtet ist, diesen Versorgungsstrang nach dessen Auswahl durch Überführen seines Spannungswandlers von dem Ruhezustand in den Lastzustand durch den Stelleingriff aktiv zu schalten, sodass für diesen Schritt ein Leistungsschalter nicht benötigt wird.

## Claims

1. Method for automatically regulating an electrical network on board an underwater vehicle,
wherein the network comprises:
- an electrical consumer (2),
- N_ges parallel-arranged supply lines (VS.1, ..., VS.N_ges), and
- a signal-processing regulator (1),
where N_ges is greater than or equal to 2,
wherein each supply line (VS.1, ..., VS.N_ges) in each case comprises:
- a voltage source (Sq.1, ..., Sq.N_ges), and
- a voltage converter (G.1, ..., G.N_ges),
and
wherein the voltage source (Sq.1, ..., Sq.N_ges) of each supply line (VS.1, ..., VS.N_ges) is electrically connected via the respective voltage converter (G.1, ..., G.N_ges) of this supply line (VS.1, ..., VS.N_ges) to the consumer (2), and
wherein the consumer (2) is supplied with electrical current and receives electrical power,
wherein the respective voltage converter (G.1, ..., G.N_ges) of each supply line (VS.1, ..., VS.N_ges) is operated in either at least one load state or at least one idle state,
wherein a discharge adaptation step is performed at least once automatically, said discharge adaptation step comprising the steps in which the regulator (1):
- selects N supply lines (VS.i(1), ..., VS.i(N)) from the N_ges supply lines (VS.1, ..., VS.N_ges) of the network depending on the present power consumption P of the consumer (2), and
- controls the voltage converters (G.1, ..., G.N_ges) of the N_ges supply lines (VS.1, ..., VS.N_ges) of the network in such a way that the voltage converters (G.i(1), ..., G.i(N)) of the N selected supply lines (VS.i(1), ..., VS.i(N)) are in each case in a load state and the voltage converters of the remaining supply lines are in each case in an idle state,
wherein the consumer (2) is supplied with electrical current from the N voltage sources (Sq.i(1), ..., Sq.i(N)) of the N selected supply lines (VS.i(1), ..., VS.i(N)), **characterized in that** at least one of the non-selected supply lines of the N_ges supply lines (VS.1, ..., VS.N_ges) of the network remains electrically connected to the consumer (2),
wherein the voltage converter of this non-selected supply line is switched on in the idle state and can be transferred from the idle state into the load state by means of an adjustment procedure;
wherein, after being selected by the regulator, this supply line is activated by transferring its voltage converter from the idle state into the load state by means of the adjustment procedure, wherein a power switch is not required for this step.

2. Method according to Claim 1,
**characterized in that**
during the discharge adaptation step, the regulator (1) performs the selection of the N supply lines (VS.i(1), ..., VS.i(N)):
- depending on the present power consumption P, and
- additionally depending on present states of the N_ges supply lines (VS.1, ..., VS.N_ges) of the network.

3. Method according to Claim 2,
**characterized in that**
an automatically evaluable discharge-number relationship (EAZ) is predefined
which in each case defines a target number N_opt = N_opt(P) of simultaneously active supply lines of the network for a multiplicity of possible values for the power consumption P of the consumer (2), and
a discharge-selection criterion (EAK) depending on the states of the N_ges supply lines (VS.1, ..., VS.N_ges) of the network is predefined,
wherein the step in which the regulator (1) selects N supply lines (VS.i(1), ..., VS.i(N)) comprises the steps in which the regulator (1):
- determines a target number N_opt(P) which the predefined discharge-number relationship (EAZ) assigns to the present power consumption P of the consumer (2), and
- performs the selection of the N supply lines (VS.i(1), ..., VS.i(N)) depending on the states of the N_ges supply lines (VS.1, ..., VS.N_ges) by applying the predefined discharge-selection criterion (EAK), where N is greater than or equal to N_opt(P).

4. Method according to Claim 2 or Claim 3, **characterized in that**
an automatically evaluable power output relationship is predefined which in each case defines a target total nominal power P_opt(P) of the electrical power to be supplied in total by the N_ges supply lines (VS.1, ..., VS.N_ges) for a multiplicity of possible values for the power consumption P of the consumer,
a discharge-selection criterion (EAK) depending on the states of the N_ges supply lines (VS.1, ..., VS.N_ges) of the network is defined, wherein the step in which the regulator (1) selects the N supply lines (VS.i(1), ..., VS.i(N)) comprises the steps in which the regulator (1):
- determines a target total nominal power P_opt(P) which the power output relationship assigns to the present power consumption P of the consumer (2), and
- selects the N supply lines (VS.i(1), ..., VS.i(N)) by applying the predefined discharge-selection criterion depending on the states of the N_ges supply lines (VS.1, ..., VS.N_ges) in such a way that these selected supply lines together provide at least the target total nominal power P_opt(P).

5. Method according to any of Claims 2 to 4,
**characterized in that**
the regulator (1) performs the selection of the N supply lines (VS.i(1), ..., VS.i(N)) depending on:
- the states of charge (SOC(1), ..., SOC(N_ges)) of the N_ges voltage sources (Sq.1, ..., Sq.N_ges),
- the current temperatures (Temp(1), ..., Temp(N_ges)) of the N_ges voltage sources (Sq.1, ..., Sq.N_ges),
- the current temperatures of the voltage converters (G.1, ..., G.N_ges),
- the numbers (Anz(1), ..., Anz(N_ges)) of respectively hitherto performed charging procedures and/or discharging procedures for the N_ges voltage sources (Sq.1, ..., Sq.N_ges), and/or
- the spatial positionings of the N_ges supply lines (VS.1, ..., VS.N_ges).

6. Method according to Claim 5,
**characterized in that**
the regulator (1) selects those N supply lines (VS.i(1), ..., VS.i(N)) whose voltage sources (Sq.i(1), ..., Sq.i(N)) have the highest states of charge at the time of the selection.

7. Method according to any of the preceding claims,
**characterized in that**
at least one load U-I relationship (U-I.L(i)) and at least one idle U-I relationship (U-I.R(i)) are predefined for each voltage converter (G.i),
wherein each U-I relationship defines a current intensity (I_out(i)) to be supplied by the voltage converter (G.i) depending on the value of the applied voltage (U_out), wherein the load U-I relationship (U-I.L(i)) produces a higher value for the current intensity to be supplied than the idle U-I relationship (U-I.R(i)) at least in a value range for the voltage applied to the voltage converter (G.i) in the case of an equal value for the applied voltage,
wherein the step in which the regulator (1) controls a voltage converter (G.i) in such a way that the voltage converter (G.i) is in a load state causes the voltage converter (G.i) to operate according to the or a load U-I relationship (U-I.L(i)), and
wherein the step in which the regulator controls a voltage converter (G.i) in such a way that the voltage converter (G.i) is in an idle state causes the voltage converter (G.i) to operate according to the or an idle U-I relationship (U-I.R(i)).

8. Method according to any of the preceding claims,
**characterized in that**
for each voltage converter (G.i), a U-I characteristic is predefined in each case which:
- defines the current intensity (I_out(i)) to be supplied by the voltage converter (G.i) depending on the applied voltage (U_out), and
- depends on a variable characteristic parameter, wherein, at least in a value range for the voltage (U_out) applied to the voltage converter (G.i) in the case of an equal value for the applied voltage, the greater the characteristic parameter, the greater the value for the current intensity (I_out(i)) defined by the U-I characteristic,
wherein the step of transferring a voltage converter (G.i) from an idle state into a load state comprises the step of increasing the characteristic parameter of this voltage converter (G.i), and
wherein the step of transferring a voltage converter (G.i) from a load state into an idle state comprises the step of reducing the characteristic parameter of this voltage converter (G.i).

9. Method according to any of the preceding claims, **characterized in that**
each supply line (VS.1, ..., VS.N_ges) is connected or is temporarily connected to at least one further voltage source (3, 4),
wherein each voltage source (Sq.1, ..., Sq.N_ges) of the network can either:
- output electrical energy to the consumer (2), or
- receive and store electrical energy from the further voltage source (3, 4),
wherein a charge adaptation step is performed at least once in which:
- the regulator (1) selects M supply lines (VS.j(1), ..., VS.j(M)), and
- the voltage sources (Sq.j(1), ..., Sq.j(M)) of the selected M supply lines (VS.j(1), ..., VS.j(M)) are charged from the further voltage source (3, 4).

10. Method according to Claim 9,
**characterized in that**
the charge adaptation step comprises the additional steps in which:
- the regulator (1) controls the voltage converters (G.1, ..., G.N_ges) in such a way that at least the voltage converters (G.j(1), ..., G.j(M)) of the selected M supply lines (VS.j(1), ..., VS.j(M)) are in the or a load state, and
- the voltage sources (Sq.j(1), ..., Sq.j(M)) of the selected M supply lines (VS.j(1), ..., VS.j(M)) are charged from the further voltage source (3, 4) using the voltage converters (G.j(1), ..., G.j(M)) in the load state of the selected M supply lines (VS.j(1), ..., VS.j(M)).

11. Method according to Claim 9 or Claim 10,
**characterized in that**
at least one charge adaptation step comprises the steps in which:
- the regulator (1) determines a target number M_opt of voltage sources to be charged, and
- the regulator (1), when selecting the M supply lines (VS.j(1), ..., VS.j(M)) to be charged, applies a predefined charge-selection criterion (BAK) depending on the states of the supply lines (VS.1, ..., VS.N_ges) of the network, where M is less than or equal to M_opt.

12. Method according to Claim 11,
**characterized in that**
the target number M_opt depends on a power parameter of the further voltage source (3).

13. Method according to Claim 11 or Claim 12,
**characterized in that**
the charge-selection criterion (BAK) depends on:
- the states of charge (SOC(1), ..., SOC(N_ges)) of the voltage sources (Sq.1, ..., Sq.N_ges),
- the current temperatures (Temp(1), ..., Temp(N_ges)) of the voltage sources (Sq.1, ..., Sq.N_ges),
- the current temperatures of the voltage converters (G.1, ..., G.N_ges),
- the numbers (Anz(1), ..., Anz(N_ges)) of respectively hitherto performed charging procedures and/or discharging procedures for the voltage sources (Sq.1, ..., Sq.N_ges), and/or
- the spatial positionings of the supply lines (VS.1, ..., VS.N_ges).

14. Method according to any of Claims 9 to 13,
**characterized in that**
the regulator (1), if a supply line is associated at the same time:
- not only with the N supply lines (VS.i(1), ..., VS.i(N)) selected for the electrical supply of the consumer (2),
- but also with the M supply lines (VS.j(1), ..., VS.j(M)) selected for charging,
decides automatically:
- either to control the voltage converter of this supply line in such a way that it is in the load state, and to select a different supply line for charging,
- or to control the voltage converter of this supply line in such a way that it is in the idle state, and to control the voltage converter of a different supply line in such a way that it is transferred from the idle state into the load state.

15. Underwater vehicle having an electrical network,
wherein the network comprises:
- an electrical consumer (2),
- N_ges parallel-arranged supply lines (VS.1, ..., VS.N_ges), and
- a signal-processing regulator (1),
where N_ges is greater than or equal to 2,
wherein each supply line (VS.1, ..., VS.N_ges):
- is electrically connected to the consumer (2),
- in each case comprises a voltage source (Sq.1, ..., Sq.N_ges) and a voltage converter (G.1, ..., G.N_ges), and
- is designed to contribute to the supply of the consumer (2) with electrical current, and
wherein the consumer (2) is designed to receive electrical power,
wherein the voltage converter (G.1, ..., G.N_ges) of each supply line (VS.1, ..., VS.N_ges) is operable in either a load state or an idle state,
wherein the regulator (1) is designed to perform a discharge adaptation step which comprises the steps in which the regulator (1):
- selects N supply lines (VS.i(1), ..., VS.i(N)) from the N_ges supply lines (VS.1, ..., VS.N_ges) of the network depending on the present power consumption P of the consumer (2), and
- controls the voltage converters (G.1, ..., G.N_ges) of the N_ges supply lines (VS.1, ..., VS.N_ges) of the network in such a way that the voltage converters (G.i(1), ..., G.i(N)) of the N selected supply lines (VS.i(1), ..., VS.i(N)) are in each case in the load state and the voltage converters of the remaining supply lines are in each case in the idle state,
wherein the network is designed so that the N voltage sources (Sq.i(1), ..., Sq.i(N)) of the N selected supply lines (VS.i(1), ..., VS.i(N)) supply the consumer (2) with electrical current, and
wherein all N_ges supply lines (VS.1, ..., VS.N_ges) of the network are connected at least temporarily to the consumer (2),
**characterized in that** the network is designed so that at least one of the non-selected supply lines of the N_ges supply lines (VS.1, ..., VS.N_ges) of the network remains electrically connected to the consumer (2), wherein the voltage converter of this non-selected supply line is switched on in the idle state and can be transferred from the idle state into the load state by means of an adjustment procedure;
wherein the regulator is configured to activate this supply line, after selecting the latter, by transferring its voltage converter from the idle state into the load state by means of the adjustment procedure, so that a power switch is not required for this step.

## Revendications

1. Procédé de régulation automatique d'un réseau électrique embarqué à bord d'un véhicule sous-marin,
le réseau comprenant
- un consommateur (2) électrique,
- N_ges lignes d'alimentation disposées en parallèle (VS.1, ..., VS.N_ges) et
- un régulateur (1) de traitement de signaux ,
N_ges étant supérieur ou égal à 2,
chaque ligne d'alimentation (VS.1, ..., VS.N_ges) comprenant chacune
- une source de tension (Sq.1, ..., Sq.N_ges) et
- un transformateur de tension (G.1, ..., G.N_ges)
et
la source de tension (Sq.1, ..., Sq.N_ges) de chaque ligne d'alimentation (VS.1, ..., VS.N_ges) étant reliée électriquement au consommateur (2) par le transformateur de tension (G.1, ..., G.N_ges) respectif de ladite ligne d'alimentation (VS.1, ..., VS.N_ges) et
le consommateur (2) étant alimenté en courant électrique et absorbant de la puissance électrique,
le transformateur de tension (G.1, ..., G.N_ges) respectif de chaque ligne d'alimentation (VS.1, ..., VS.N_ges) fonctionnant au choix soit dans au moins un état de charge soit dans au moins un état de repos,
une étape d'adaptation de décharge étant réalisée automatiquement au moins une fois, qui comprend les étapes que le régulateur (1)
- choisit N lignes d'alimentation (VS.i(1), ..., VS.i(N)) parmi les N_ges lignes d'alimentation (VS.1, ..., VS.N_ges) du réseau en fonction de la consommation de puissance courante P du consommateur (2) et
- pilote les transformateurs de tension (G.1, ..., G.N_ges) des N_ges lignes d'alimentation (VS.1, ..., VS.N_ges) du réseau de telle sorte que les transformateurs de tension (G.i(1), G.i(N)) des N lignes d'alimentation (VS.i(1), ..., VS.i(N)) sélectionnées sont dans respectivement un état de charge et les transformateurs de tension des lignes d'alimentation restantes sont dans respectivement un état de repos,
le consommateur (2) étant alimenté électriquement par les N sources de tension (Sq.i(1), ..., Sq.i(N)) des N lignes d'alimentation (VS.i(1), ..., VS.i(N)) sélectionnées, **caractérisé en ce qu'**au moins une des lignes d'alimentation non sélectionnées des N_ges lignes d'alimentation (VS.1, ..., VS.N_ges) du réseau reste électriquement reliée au consommateur (2),
le transformateur de tension de ladite ligne d'alimentation non sélectionnée étant mis en service dans l'état de repos et pouvant être transféré de l'état de repos dans l'état de charge par une intervention de réglage ;
ladite ligne d'alimentation étant activée après avoir été sélectionnée par le régulateur **en ce que** son transformateur de tension est transféré de l'état de repos dans l'état de charge par l'intervention de réglage, un disjoncteur n'étant pas nécessaire pour cette étape.

2. Procédé selon la revendication 1,
**caractérisé en ce que**
le régulateur (1) réalise lors de l'étape d'adaptation de décharge la sélection des N lignes d'alimentation (VS.i(1), ..., VS.i(N))
- en fonction de la consommation de puissance courante P et
- en supplément en fonction d'états courants des N_ges lignes d'alimentation (VS.1, ..., VS.N_ges) du réseau.

3. Procédé selon la revendication 2,
**caractérisé en ce que**
une relation entre la décharge et le nombre (EAZ) évaluable automatiquement est spécifiée,
laquelle fixe un nombre théorique N_opt = N_opt(P) de lignes d'alimentation simultanément actives du réseau pour une pluralité de valeurs possibles pour la consommation de puissance P du consommateur (2), et
un critère de sélection de décharge (EAK) dépendant des états des N_ges lignes d'alimentation (VS.1, ..., VS.N_ges du réseau est spécifié,
l'étape de sélection par le régulateur (1) de N lignes d'alimentation (VS.i(1), ..., VS.i(N)) comprenant les étapes selon lesquelles le régulateur (1)
- détermine un nombre théorique N_opt(P), que la relation entre la décharge et le nombre (EAZ) spécifiée associe à la consommation de puissance courante P du consommateur (2), et
- réalise la sélection des N lignes d'alimentation (VS.i(1), ..., VS.i(N)) en fonction des états des N_ges lignes d'alimentation (VS.1, ..., VS.N_ges) en appliquant le critère de sélection de décharge (EAK) spécifié, N étant supérieur ou égal à N_opt(P).

4. Procédé selon la revendication 2 ou la revendication 3,
**caractérisé en ce que**
une relation de puissance de sortie évaluable automatiquement est spécifiée, qui spécifie pour une pluralité de valeurs possibles de la consommation de puissance P du consommateur respectivement une puissance nominale totale théorique P_opt(P) de la puissance électrique à fournir au total par les N_ges lignes d'alimentation (VS.1, ..., VS.N_ges),
un critère de sélection de décharge (EAK) dépendant des états des N_ges lignes d'alimentation (VS.1, ..., VS.N_ges) du réseau est spécifié, l'étape de sélection par le régulateur (1) des N lignes d'alimentation (VS.i(1), ..., VS.i(N)) comprenant les étapes selon lesquelles le régulateur (1)
- détermine une puissance nominale totale théorique P_opt(P), qui associe la relation de puissance de sortie à la consommation de puissance courante P du consommateur (2), et
- sélectionne les N lignes d'alimentation (VS.i(1), ..., VS.i(N)) en appliquant le critère de sélection de décharge spécifié en fonction des états des N_ges lignes d'alimentation (VS.1, ..., VS.N_ges) de telle sorte que lesdites lignes d'alimentation sélectionnées fournissent ensemble au moins la puissance nominale totale théorique P_opt(P).

5. Procédé selon l'une des revendications 2 à 4,
**caractérisé en ce que**
le régulateur (1) réalise la sélection des N lignes d'alimentation (VS.i(1), ..., VS.i(N)) en fonction
- des états de charge (SOC(1), ..., SOC(N_ges)) des N_ges sources de tension (Sq.1, ..., Sq.N_ges),
- des températures actuelles (Temp(1), ..., Temp(N_ges)) des N_ges sources de tension (Sq.1, ..., Sq.N_ges),
- des températures courantes des transformateurs de tension (G.1, ..., G.N_ges),
- des nombres (Nbre(1), ..., Nbre(N_ges)) des processus de charge et/ou des processus de décharge réalisés jusqu'à présent pour les N_ges sources de tension (Sq.1, ..., Sq.N_ges) et/ou
- des positionnements spatiaux des N_ges lignes d'alimentation (VS.1, ..., VS.N_ges)

6. Procédé selon la revendication 5,
**caractérisé en ce que**
le régulateur (1) sélectionne ces N lignes d'alimentation (VS.i(1), ..., VS.i(N)) précisément dont les sources de tension (Sq.i(1), ..., Sq.i(N)) présentent les états de charge les plus élevés au moment de la sélection.

7. Procédé selon l'une des revendications précédentes,
**caractérisé en ce que**
sont spécifiées pour chaque transformateur de tension (G.i) respectivement au moins une relation de charge-U-I (U-I.L(i)) et au moins une relation de repos-U-I ((U-I.R(i)),
chaque relation U-I fixant une intensité de courant (I_out(i)) à fournir par le transformateur de tension (G.i) en fonction de la valeur de la tension appliquée (U_out),
la relation de charge-U-I (U-I.L(i) fournissant une valeur plus élevée pour l'intensité de courant à fournir que la relation de repos-U-I (U-I.R(i)) pour la même valeur pour la tension appliquée au moins dans une plage de valeurs pour la tension appliquée sur le transformateur de tension (G.i),
l'étape du pilotage par le régulateur (1) d'un transformateur de tension (G.i) de telle sorte que le transformateur de tension (G.i) est dans un état de charge, amenant le transformateur de tension (G.i) à fonctionner selon la ou une relation de charge-U-I (U-I.L(i)), et
l'étape du pilotage par le régulateur d'un transformateur de tension (G.i) de telle sorte que le transformateur de tension (G.i) est dans un état de repos, amenant le transformateur de tension (G.i) à fonctionner selon la ou une relation de repos U-I (U-I.R(i)).

8. Procédé selon l'une des revendications précédentes,
**caractérisé en ce que**
une courbe caractéristique U-I est respectivement spécifiée pour chaque transformateur de tension (G.i), laquelle
- fixe l'intensité de courant (I_out(i)) à fournir par le transformateur de tension (G.i) en fonction de la tension appliquée (U_out) et
- dépend d'un paramètre variable de courbes caractéristiques,
la valeur pour l'intensité de courant (I_out(i)) fixée par la courbe caractéristique U-I étant d'autant plus élevée que le paramètre de courbes caractéristiques est élevé, à la même valeur pour la tension appliquée au moins dans une plage de valeurs pour la tension appliquée (U_out) sur le transformateur de tension (G.i), l'étape du transfert d'un transformateur de tension (G.i) d'un état de repos dans un état de charge comprenant l'étape pour augmenter le paramètre de courbes caractéristiques dudit transformateur de tension (G.i), et
l'étape du transfert d'un transformateur de tension (G.i) d'un état de charge dans un état de repos comprenant l'étape pour diminuer le paramètre de courbes caractéristiques dudit transformateur de tension (G.i).

9. Procédé selon l'une des revendications précédentes,
**caractérisé en ce que**
chaque ligne d'alimentation (VS.1, ..., VS.N_ges) est reliée à au moins une source de tension supplémentaire (3, 4) ou est reliée à celle-ci par intermittence, chaque source de tension (Sq.1, ..., Sq.N_ges) du réseau pouvant au choix
- distribuer de l'énergie électrique au consommateur (2), ou
- absorber et stocker de l'énergie électrique provenant de la source de tension supplémentaire (3, 4), une étape d'adaptation de charge étant réalisée au moins une fois, dans laquelle
- le régulateur (1) sélectionne M lignes d'alimentation (VS.j(1), ..., VS.j(M)) et
- les sources de tension (Sq.j(1), ..., Sq.j(M)) des M lignes d'alimentation (VS.j(1), ..., VS.j(M)) sélectionnées sont chargées à partir de la source de tension supplémentaire (3,4).

10. Procédé selon la revendication 9,
**caractérisé en ce que**
l'étape d'adaptation de charge comprend les étapes additionnelles selon lesquelles
- le régulateur (1) pilote les transformateurs de tension (G.1, ..., G.N_ges) de telle sorte qu'au moins les transformateurs de tension (G.j(1), ..., G.j(M)) des M lignes d'alimentation (VS.j(1), ..., VS.j(M)) sélectionnées sont dans ou un état de charge, et
- les sources de tension (Sq.j(1), ..., Sq.j(M)) des M lignes d'alimentation (VS.j(1), ..., VS.j(M)) sélectionnées sont chargées par la source de tension supplémentaire (3, 4) en utilisant les transformateurs de tension (G.j(1), ..., G.j(M)) se trouvant dans l'état de charge des M lignes d'alimentation (VS.j(1), ..., VS.j(M)) sélectionnées.

11. Procédé selon la revendication 9 ou la revendication 10,
**caractérisé en ce que**
au moins une étape d'adaptation de charge comprend les étapes selon lesquelles
- le régulateur (1) détermine un nombre théorique M_opt de sources de tension à charger et
- le régulateur (1) applique un critère de sélection de charge (BAK) spécifié et dépendant des états des lignes d'alimentation (VS.1, ..., VS.N_ges) du réseau, lors de la sélection des M lignes d'alimentation (VS.j(1), ..., VS.j(M)) à charger, M étant inférieur ou égal à M_opt.

12. Procédé selon la revendication 11,
**caractérisé en ce que**
le nombre théorique M_opt dépend d'un paramètre de puissance de la source de tension supplémentaire (3).

13. Procédé selon la revendication 11 ou la revendication 12,
**caractérisé en ce que**
le critère de sélection de charge (BAK) dépend
- des états de charge (SOC(1), ..., SOC(N_ges)) des sources de tension (Sq.1, ..., Sq.N_ges),
- des températures courantes (Temp(1), ..., Temp(N_ges)) des sources de tension (Sq.1, ..., Sq.N_ges),
- des températures courantes des transformateurs de tension (G.1, ..., G.N_ges),
- des nombres (Nbre(1), ..., Nbre(N_ges)) des processus de charge et/ou des processus de décharge réalisés jusqu'à présent pour les sources de tension (Sq.1, ..., Sq.N_ges) et/ou
- des positionnements spatiaux des lignes d'alimentation (VS.1, ..., VS.N_ges).

14. Procédé selon l'une des revendications 9 à 13, **caractérisé en ce que**
le régulateur (1) décide alors, lorsqu'une ligne d'alimentation relève en même temps
- à la fois des N lignes d'alimentation (VS.i(1), ..., VS.i(N)) sélectionnées pour l'alimentation électrique du consommateur (2)
- et des M lignes d'alimentation (VS.j(1), ..., VS.j(M)) sélectionnées pour le chargement
,
automatiquement,
- soit de piloter le transformateur de tension de ladite ligne d'alimentation pour qu'il soit dans l'état de charge et de sélectionner une autre ligne d'alimentation pour la charge
- soit de piloter le transformateur de tension de ladite ligne d'alimentation de telle sortie qu'il soit dans l'état de repos, et de piloter le transformateur de tension d'une autre ligne d'alimentation de telle sorte qu'il soit transféré de l'état de repos dans l'état de charge.

15. Véhicule sous-marin avec un réseau électrique,
le réseau comprenant
- un consommateur (2) électrique,
- N_ges lignes d'alimentation disposées en parallèle (VS.1, ..., VS.N_ges) et
- un régulateur (1) de traitement de signaux
,
N_ges étant supérieur ou égal à 2,
chaque ligne d'alimentation (VS.1, ..., VS.N_ges)
- étant reliée électriquement au consommateur (2),
- comprenant chacune une source de tension (Sq.1, ..., Sq.N_ges) et un transformateur de tension (G.1, ..., G.N_ges) et
- étant configurée pour contribuer à l'alimentation en courant électrique du consommateur (2), et
le consommateur (2) étant configuré pour absorber de la puissance électrique,
le transformateur de tension (G.1, ..., G.N_ges) de chaque ligne d'alimentation (VS.1, ..., VS.N_ges) pouvant fonctionner au choix dans un état de charge ou dans un état de repos,
le régulateur (1) étant configuré pour réaliser une étape d'adaptation de décharge, qui comprend les étapes selon lesquelles le régulateur (1)
- choisit N lignes d'alimentation (VS.i(1), ..., VS.i(N)) parmi les N_ges lignes d'alimentation (VS.1, ..., VS.N_ges) du réseau en fonction de la consommation de puissance courante P du consommateur (2) et
- pilote les transformateurs de tension (G.1, ..., G.N_ges) des N_ges lignes d'alimentation (VS.1, VS.N_ges) du réseau de telle sorte que les transformateurs de tension (G.i(1), ..., G.i(N)) des N lignes d'alimentation (VS.i(1), ..., VS.i(N)) sélectionnées sont respectivement dans l'état de charge et les transformateurs de tension des lignes d'alimentation restantes sont respectivement dans l'état de repos,
le réseau étant configuré de telle sorte que les N sources de tension (Sq.i(1), ..., Sq.i(N)) des N lignes d'alimentation (VS.i(1), ..., VS.i(N)) sélectionnées alimentent électriquement le consommateur (2), et toutes les N_ges lignes d'alimentation (VS.1, ..., VS.N_ges) du réseau étant reliées au moins par intermittence au consommateur (2),
**caractérisé en ce que** le réseau est configuré de telle sorte qu'au moins une des lignes d'alimentation non sélectionnées des N_ges lignes d'alimentation ((VS.1, ..., VS.N_ges) du réseau reste électriquement reliée au consommateur (2), le transformateur de tension de ladite ligne d'alimentation non sélectionnée étant mis en service dans l'état de repos et pouvant être transféré de l'état de repos dans l'état de charge par une intervention de réglage,
le régulateur étant mis au point pour activer ladite ligne d'alimentation après sa sélection en transférant son transformateur de tension de l'état de repos dans l'état de charge par l'intervention de réglage, si bien qu'un disjoncteur n'est pas nécessaire pour ladite étape.
